(19) Europäisches Patentamt / European Patent Office / Office européen des brevets

(11) **EP 2 654 419 B1**

(12) **FASCICULE DE BREVET EUROPEEN**

(45) Date de publication et mention de la délivrance du brevet:
**17.04.2019 Bulletin 2019/16**

(21) Numéro de dépôt: **11797016.0**

(22) Date de dépôt: **20.12.2011**

(51) Int Cl.:
*A01N 25/08* (2006.01)   *A01N 37/40* (2006.01)
*A01N 43/653* (2006.01)   *A01P 3/00* (2006.01)
*A01P 7/04* (2006.01)   *A01P 13/00* (2006.01)
*A01P 21/00* (2006.01)

(86) Numéro de dépôt international:
**PCT/EP2011/073341**

(87) Numéro de publication internationale:
**WO 2012/084900 (28.06.2012 Gazette 2012/26)**

(54) **MÉTHODE DE TRAITEMENT PHYTOSANITAIRE DE PLANTS AU MOYEN D'UNE COMPOSITION PHYTOSANITAIRE COMPRENANT UNE ZÉOLITHE**

VERFAHREN ZUR PHYTOSANITÄREN BEHANDLUNG VON PFLANZEN MITTELS EINER PHYTOSANITÄREN ZUSAMMENSETZUNG, DIE EINE ZEOLITHE ENTHÄLT

METHOD FOR PHYTOSANITARY TREATMENT OF PLANTS BY MEANS OF A PHYTOSANITARY COMPOSITION COMPRISING A ZEOLITHE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2010 FR 1060835**

(43) Date de publication de la demande:
**30.10.2013 Bulletin 2013/44**

(73) Titulaire: **Université De Poitiers**
**86034 Poitiers Cedex (FR)**

(72) Inventeurs:
• **CHOLLET, Jean-François**
**F-79390 Doux (FR)**
• **FRAPPER, Gilles**
**F-86240 Smarves (FR)**
• **GUGLIELMI, Marie-Anne**
**F-20166 Porticcio (FR)**
• **JOLY, Guy**
**F-86800 Lavoux (FR)**
• **LEMOINE, Rémi**
**F-86000 Poitiers (FR)**
• **MAGNOUX, Patrick**
**F-86000 Poitiers (FR)**
• **ROCHER, Françoise**
**F-79390 Doux (FR)**

(74) Mandataire: **Lavoix**
**62, rue de Bonnel**
**69448 Lyon Cedex 03 (FR)**

(56) Documents cités:
EP-A1- 1 064 843   EP-A1- 1 652 536
WO-A1-01/43548   WO-A1-2009/148816
WO-A2-03/000300   WO-A2-2008/149232
DE-A1- 2 221 031   DE-A1- 4 131 117
DE-A1- 19 824 680   FR-A- 1 255 314
FR-A1- 2 344 226   FR-A1- 2 530 417
GB-A- 1 304 543   GB-A- 1 543 160
GB-A- 1 566 274   US-A- 3 359 092
US-A- 4 911 899

• SOPKOVA A ET AL: "ZEOLITES AND VETERINARY PHARMACY", SCIENCES TECHNIQUES ET PRATIQUES STP PHARMA SCIENCES, PARIS, FR, vol. 4, no. 5, 1 janvier 1994 (1994-01-01) , pages 366-372, XP009045037, ISSN: 1157-1489
• SOPKOVÁ A ET AL: "Sorption and Desorption of Inclusion Compound Guests: Different Types of Inclusion Compounds", JOURNAL OF THERMAL ANALYSIS AND CALORIMETRY, KLUWER ACADEMIC PUBLISHERS, DO, vol. 56, no. 3, 1 juin 1999 (1999-06-01), pages 1359-1366, XP019252959, ISSN: 1572-8943

- **DATABASE WPI Week 198537 Thomson Scientific, London, GB; AN 1985-226603 XP002504376, & JP 60 146803 A (SATSUKIME K) 2 août 1985 (1985-08-02)**
- **DATABASE WPI Week 198624 Thomson Scientific, London, GB; AN 1986-153386 XP002504373, & JP 61 087602 A (DAIWA KAGAKU KOGYO KK) 6 mai 1986 (1986-05-06)**
- **DATABASE WPI Week 199202 Thomson Scientific, London, GB; AN 1992-012741 XP002655417, & JP 3 262529 A (YAMADA K) 22 novembre 1991 (1991-11-22)**

- **Wagner ET AL: "UNITED STATES ENVIRONMENTAL PROTECTION AGENCY", , 21 June 2006 (2006-06-21), XP055407328, Retrieved from the Internet: URL:https://www.epa.gov/sites/production/files/2015-04/documents/octyldecyl.pdf [retrieved on 2017-09-18]**

**Description**

La présente invention concerne une méthode de traitement phytosanitaire de plantes au moyen d'une composition phytosanitaire comprenant

a) une zéolithe hydrophobe dont le rapport Si/Al est compris entre 5 et 2000 ;
b) une matière active pesticide, choisie parmi le pyrimicarbe, le penconazole, l'epoxiconazole, le chlortoluron et l'acide 5-chlorosalicylique, adsorbée et incluse au sein de la zéolithe,

ladite composition étant mise en oeuvre par application racinaire lors du traitement des plantes.

Les zéolithes sont des dérivés aluminosilicates qui peuvent exister à l'état naturel ou bien avoir été modifiés ou préparés de manière spécifique. Il existe différents types de zéolithes. Trente-cinq zéolithes naturelles et plus d'une centaine de zéolithes de synthèse sont connues. Chaque type de zéolithe se caractérise par l'architecture et la taille de son réseau. La zéolithe faujasite (FAU) présente une structure identique à celle de la faujasite naturelle. Elle est constituée, tout comme les autres zéolithes, de tétraèdres $SiO_4$ et $AlO_4^-$ connectés par leurs atomes d'oxygène : 24 tétraèdres reliés de manière à former 8 cycles à 6 tétraèdres et 6 cycles à 4 tétraèdres forment un cube-octaèdre encore appelé cage sodalite ou cage β. La structure de la zéolithe FAU peut se décrire comme un assemblage de cubes-octaèdres reliés les uns aux autres par des prismes hexagonaux. Cet assemblage fait apparaître une cavité polyédrique à 26 faces appelée supercage et qui constitue l'unité de base de la microporosité de cette zéolithe. Les supercages sont assimilées à des pseudosphères de 13 Å de diamètre et de 850 $Å^3$ de volume. Elles communiquent entre elles par l'intermédiaire d'ouvertures à 12 atomes d'oxygène (7,4 Å de diamètre). La cage β a un diamètre de 7,4 Å et un volume de 160 $Å^3$. Elle est connectée à la supercage par des ouvertures à 6 atomes d'oxygène de 3 Å de diamètre environ. La maille élémentaire de la zéolithe FAU comprend huit cages β et seize prismes hexagonaux.

Les produits phytosanitaires et leur utilisation posent un certain nombre de problèmes. Parmi ces problèmes, on peut citer

-    la perte d'efficacité dans le temps des produits une fois appliqués ou bien la durée limitée dans le temps de leur efficacité ;
-    la difficulté à libérer dans le temps et de manière contrôlée les produits phytosanitaires utilisés ;
-    la dispersion de quantités importantes de produits dans l'environnement, notamment du fait de la lixiviation ou du lessivage ;
-    la réduction des quantités de produits phytosanitaires appliqués tout en maintenant ou en améliorant leur efficacité ;
-    les difficultés rencontrées pour améliorer la biodisponibilité d'une matière active pour la plante traitée ;
-    les pertes économiques et les atteintes à l'environnement liées à l'application fréquemment renouvelée de produits phytosanitaires en tant que tels mais également des adjuvants de formulation nécessaires ;
-    les difficultés de fournir des compositions phytosanitaires permettant d'influencer ou de réguler les conditions hydriques des plantes traitées ou bien de fournir des compositions phytosanitaires qui mettent en oeuvre des neutres ou inertes pour l'environnement ;
-    les difficultés liées au mode d'application des compositions phytosanitaires connues, par exemple sous forme solide ou liquide.

La composition selon la présente invention propose d'apporter une solution à tout ou partie de ces problèmes.

Par ailleurs, la préparation de la composition selon l'invention apporte également des solutions à d'autres problèmes tels que :

-    le besoin de mettre en oeuvre des solvants organiques pour la préparation des compositions phytosanitaires connues ;
-    la réduction des quantités ou l'élimination des polymères ou produits chimiques organiques lors de la préparation de compositions phytosanitaires à effet retard au sein desquelles la matière active phytosanitaire est le plus souvent encapsulée ou bien associée à des polymères ;
-    la difficulté de contrôler les quantités de matière active incorporée au sein d'une zéolithe ;
-    la complexité des méthodes de préparation des compositions phytosanitaires à effet retard connues
-    la stabilité dans le temps des compositions phytosanitaires ;
-    la nécessité d'utiliser des quantités importantes de solvants.

Les documents US 4 911 899, GB 1 304 543, FR 2 344 226, FR 2 530 417, DE 4131117, WO2008/149232, EP1652536, US 3 359 092, FR1 255314, GB 1 566 274, WO01/43548, DE 22 21 031, GB 1 543 160, EP 1 064 843, JP60146803, JP61087602, JP3262529, WO03/000300, WO2009/148816 et DE-19824680 décrivent différentes formulations à base de zéolithes. Il en est de même pour les articles Sopkova A. et al, (1994) Zeolites and veterinary pharmacy, 4, 366-372, et Sopkova et al, (1999) Sorption and desorption of inclusion compounds guests, Journal of Thermal Analysis and Calorimetry, 56, 1359-1366.

Plusieurs articles de Sopkova et al. rapportent des associations d'un insecticide avec une zéolithe, notamment un mélange de supercypermethrine (SCM) et d'une zéolithe naturelle de type clinoptilolite contenant plus de 50 % d'argile (CT) (Sopkova, A. & Mezes, P. About the inclusion of an insecticide in zeolitic materials. Journal of Thermal Analysis 46, 471-478 (1996)). Toutefois, il s'avère que les expérimentations décrites ne sont pas reproductibles. Ces expérimentations ne peuvent pas conduire au produit d'inclusion. En effet, la modélisation de l'encapsulation de la cyperméthrine dans un canal de la zéolithe clinoptilolite indique que cette molécule phytosanitaire ne peut pas pénétrer dans le réseau silicate, contrairement à ce qui est rapporté. En réalité, la SCM était simplement adsorbée dans l'argile.

Il existe donc toujours un besoin de disposer de compositions phytosanitaires à base de zéolithe au sein de laquelle la matière active phytosanitaire se trouve encapsulée.

Ainsi, la présente invention fournit une méthode de traitement phytosanitaire de plantes au moyen d'une composition phytosanitaire comprenant

  a) une zéolithe hydrophobe dont le rapport Si/Al est compris entre 5 et 2000 ;
  b) une matière active pesticide, choisie parmi le pyrimicarbe, le penconazole, l'epoxiconazole, le chlortoluron et l'acide 5-chlorosalicylique, adsorbée et incluse au sein de la zéolithe,

ladite composition étant mise en oeuvre par application racinaire lors du traitement des plantes.

Au sein de la composition, une ou plusieurs zéolithes hydrophobes peuvent être mises en oeuvre. La zéolithe hydrophobe peut être d'origine naturelle ou bien avoir été modifiée ou préparée de manière spécifique.

De nombreuses zéolithes hydrophobes peuvent convenir pour la composition. Comme exemples de telles zéolithes convenant pour la composition, on peut citer les zéolithes décrites dans Zeolithes (1996), 17, pp 1-230 publié par Elsevier Science.

La composition comprend généralement une zéolithe hydrophobe dont l'ouverture des pores est à 12 atomes.

Comme exemples de zéolithes hydrophobes à ouverture de pores à 12, on peut citer AFI ($AlPO_4$-5), AFR (SAPO-40), AFS (MAPSO-46), AFY (CoAPO-50), ATO ($AlPO_4$.31), ATS (MAPO-36), BEA (Beta), BOG (Boggsite), BPH (Beryllophosphate-H), CAN (Cancrinite), CON (CIT-1), DFO (DAF-1), EMT (EMC-2), FAU (Faujasite), GME (Gmelinite°LTL (Linde type L), MAZ (Mazzite), MEI (ZSM-18), MOR (Mordenite), MTW (ZSM-12), OFF (Offretite), RON (Roggianite), VET (VPI-8).

Pour la composition, une zéolithe hydrophobe dont l'ouverture des pores est à ouverture de 10 atomes ou 8 atomes peut également convenir.

Comme exemples de zéolithes hydrophobes à ouverture de pores à 10 atomes, on peut citer AEL ($AlPO_4$-11), AFO ($AlPO_4$-41), AHT ($AlPO_4$-H2), DAC (Dachiardite), EPI (Epistilbite), EUO (EU-1), FER (Ferrierite), HEU (Heulandite), LAU (Laumontite), MEL (ZSM-11), MFI (ZSM-5), MFS (ZSM-57), MTT (ZSM-23), NES (NU-87), -PAR (Partheite), STI (Stilbite), TON (Theta-1), WEI (Weinebeneite), -WEN (Wenkite).

Comme exemples de zéolithes hydrophobes à ouverture de pores à 8 atomes, on peut citer ABW (LiA (Barrer and White)), AEI ($AlPO_4$-18), AFT ($AlPO_4$-52), AFX (SAPO-56), APC ($AlPO_4$-C), APD ($AlPO_4$-D), ATN (MAPO-39), ATT ($AlPO_4$-12-TAMU), ATV ($AlPO_4$-25), AWW ($AlPO_4$-22), BIK (Bikitaite), BRE (Brewsterite), CAS (Césium Aluminosilicate (Araki)), CHA (Chabazite), DDR (Decadodecasil 3R), EAB (TMA-E), EDI (Edingtonite), ERI (Erionite), GIS (Gismondine), GOO (Goosecreekite), JBW (NaJ (Barrer and White)), KFI (ZK-5), LEV (Levyne), LTA (Linde type A), MER (Merlinoite), MON (Montesommaite), NAT (Natrolite), PAU (Paulingite), PI-H (Phillilpsite), RHO (Rho), RTE (RUB-3), RTH (RUB-13), THO (Thomsonite), VNI (VP1-9), YUG (Yugawaralite), ZON (ZAPO-M1).

D'autres zéolithes hydrophobes à ouverture de pores à 9, 14, 18, ou 20 atomes peuvent convenir, par exemple CHI (Chiavennite), LOV (Lovdarite), RSN (RUB-17), VSV (VPI-7), CLO (Cloverite), VFI (VPI-5), AET ($AlPO_4$-8).

Les caractéristiques de ces zéolithes connues sont décrites par Zeolithes (1996), 17, pp 1-230 publié par Elsevier Science, en particulier aux pages 9 à 12.

La composition comprend une zéolithe hydrophobe comprenant des pores et des cages ou volumes de cage. Les pores de la zéolithe de la composition doivent permettre l'inclusion de la matière active phytosanitaire au sein des cages. De manière générale, la zéolithe présente des pores dont le diamètre est de 4 à 8 Å, de préférence de 5 à 7,5 Å, en particulier de 7,4 Å. De manière générale, la zéolithe présente un diamètre de supercage alpha de 13 Å.

Comme exemples de zéolithes hydrophobes au sein de la composition selon l'invention, on peut citer la zéolithe NaX, Si/Al = 1,18 et volume microporeux (VM) = 0,291 $cm^3$/g, ou la zéolithe NaY, Si/Al = 2,43 et VM = 0,345 $cm^3$/g, ou bien encore la zéolithe HY commerciale (HFAU40) avec Si/Al = 32 et VM = 0,245 $cm^3$/g.

De manière préférée, la composition comprend une zéolithe de type faujasite. Avantageusement, ces zéolithes présentent de larges pores. Elles peuvent être obtenues dans un large éventail de compositions en faisant varier le rapport Si/Al et peuvent être représentées par la formule (I)

$$M^{n+}_{x/n}[(AlO_2)_x(SiO_2)_{192-x}].zH_2O \qquad (I)$$

dans laquelle

- $M^{n+}$ représente un cation de charge n, en général représente 1 ou 2 ;
- x représente le nombre de cation ;
- [ ] représente le réseau silico-aluminate caractérisé par le rapport Si/Al ;
- z représente le nombre de molécules d'eau zéolithique.

Comme exemples de zéolithes, on connaît notamment deux grands types de faujasite selon la composition Si/Al :

- les faujasites X, dont le rapport Si/Al est compris entre 1 et 1,5 ;
- les faujasites Y, dont le rapport Si/Al est compris entre 1,5 et 3.

Des faujasites présentant des rapports plus élevés peuvent être préparées par des procédés de désalumination, en particulier des procédés de désalumination post synthèse.

Comme zéolithes avantageuses, on peut citer les zéolithes FAU depuis une zéolithe totalement désaluminée jusqu'à la faujasite NaX, $Na_{96}FAU$.

De manière générale, les paramètres de maille et les positions atomiques de la zéolithe, en particulier la faujasite, ont été fixés, selon un modèle rigide. Il est également possible d'utiliser des zéolithes, en particulier la faujasite, présentant une certaine liberté de mouvement, notamment des cations ; les déformations des ouvertures peuvent également influer sur la description de la quantité de molécules stockées et sur la dynamique de désorption de la composition.

Ainsi, la zéolithe hydrophobe peut être choisie parmi les zéolithes désaluminées, en particulier parmi les zéolithes désaluminées et à ouverture de pores à 12, 10 ou 8 atomes. De manière habituelle, une telle zéolithe désaluminée peut être obtenue par les techniques usuelles de désalumination. Comme techniques conventionnelles utiles pour la désalumination des zéolithes, on peut citer l'hydrotraitement, le traitement avec des acides minéraux par exemple HCl, $HNO_3$, $H_2SO_4$, etc., ou encore le traitement chimique par exemple par $SiCl_4$, hexafluorosilicate, EDTA, etc.

La description décrit une composition phytosanitaire comprenant avantageusement une zéolithe hydrophobe dont le rapport Si/Al est compris entre 1 et 2000, de préférence entre 1 et 1000, notamment entre 5 et 100.

La granulométrie de la zéolithe mise en oeuvre au sein de la composition peut être choisie afin d'améliorer l'efficacité de la composition. En général, une granulométrie croissante de la zéolithe de la composition conduit à une augmentation de la durée d'efficacité de la matière active phytosanitaire. Ainsi, la granulométrie de la zéolithe au sein de la composition est généralement comprise entre 0,01 et 0,8 mm, de préférence entre 0,1 et 0,5 mm, en particulier entre 0,2 et 0,4 mm. La composition peut se présenter sous d'assez nombreuses formes, par exemple sous forme extrudée ou bien sous forme de granulés, généralement réalisés à partir de zéolithe en poudre et d'un agent liant.

La composition peut comprendre de 30 à 99,9 %, de zéolithe, de préférence de 50 à 99,9 % ou encore de 80 à 99,9 % de zéolithe.

Outre une zéolithe hydrophobe, la composition phytosanitaire comprend une matière active phytosanitaire. Plusieurs matières actives phytosanitaires peuvent être mises en oeuvre au sein de la composition. Un grand nombre de matières actives phytosanitaires peuvent convenir.

De manière avantageuse, la matière active phytosanitaire est choisie en fonction de la zéolithe mise en oeuvre, en particulier en fonction des paramètres de taille de pore et de volume de cage de la zéolithe. Ainsi, la matière active phytosanitaire se trouve incluse au sein de la zéolithe. Au sein de la zéolithe, la matière active se trouve adsorbée, en particulier par l'établissement de liaisons de type hydrogène avec les atomes d'oxygène de la structure de la zéolithe.

Toutefois, au sein de la composition, une partie de la matière active phytosanitaire peut également se trouver en dehors du réseau que constitue la zéolithe.

Les matières actives pesticides pour la composition de la méthode selon l'invention sont choisies parmi le pyrimicarbe, penconazole, epoxyconazole, chlortoluron ou bien encore l'acide 5-chlorosalycilique.

De manière avantageuse, la matière active pesticide de la composition se trouve protégée lorsqu'elle se trouve adsorbée au sein de la zéolithe hydrophobe.

Les plantes pouvant être traitée par la méthode selon l'invention peuvent être choisies parmi : coton ; lin ; vigne ; fruits et légumes telles que *Rosaceae sp.* (par exemple fruits à pépins comme poires ou pommes, fruits à noyaux comme abricot, amande et pèche), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (par exemple banane, plantins), *Rubiaceae sp., Theaceae sp., Sterculiceae sp., Rutaceae sp.* (par exemple citron, orange, pamplemousse); *Solanaceae sp.* (par exemple tomates, pommes de terre, poivrons, aubergines), *Liliaceae sp., Asteraceae sp.* (par exemple salade), *Umbelliferae sp., Chenopodiaceae sp., Cucurbitaceae sp., Papilionaceae sp.* (par exemple pois), *Rosaceae sp.* (par exemple fraise); cultures majeures telles que *Graminae sp.* (par exemple mais, gazon, céréales telles que blé, riz, avoine, orge, triticale), *Asteraceae sp.* (par exemple tournesol), *Cruciferae sp.* (par exemple colza), *Fabacae sp.* (par exemple cacahouète, pois, haricots), *Papilionaceae sp.* (par exemple soja), *Chenopodiaceae sp.* (par exemple betterave); plantes oléagineuses telles que *Brassta napus* (par exemple *canola*), *Brassica rapa, Brassica juncea* (par exemple moutarde*)* ; *Brassica carinata ; Ribesioidae sp., Jugletaceae sp., Betulaceae sp., Anacardiaceae sp., Fagaceae sp., Moraceae sp., Oleaceae sp., Actinidaceae sp., Lauraceae sp., Rubiaceae sp.* (tel le caféier), *Theaceae sp., Sterculiceae sp., Liliaceae sp., Compositiae sp.* (telles que laitue, artichaut, endive, chicorée), *Umbelliferae sp.* (telles que carottes, persil, céleri), *Cucurbitaceae sp.* (telles que cocombre, melons, courges), *Alliaceae sp.* (telles que oignons, ail), *Cruciferae sp.* (telles que choux, broccoli, chou pak choi, radis, cresson), *Leguminosae sp., Chenopodiaceae sp.* (telles qu'épinards, betteraves), *Malvaceae sp., Asparagaceae,* cultures horticoles et forestières; ou encore les homologues modifiées génétiquement de ces plantes.

De même, la méthode de traitement peut être utilisée pour la protection ou la préservation.

La méthode permet également de lutter contre certaines maladies des plantes pour lesquelles aucune solution efficace n'existe. Par exemple, la méthode de traitement permet de lutter contre les maladies du bois de la vigne par traitement racinaire des plants de vigne au moyen d'une composition.

Les exemples suivants illustrent le procédé, en particulier les avantages de ce procédé.

Exemple 1 : Étude de l'adsorption de composés phytopharmaceutiques dans des zéolithes

1.1 - Mise au point de l'adsorption de différents composés phytopharmaceutiques sur différentes zéolithes faujasites à l'échelle du laboratoire (quantités de l'ordre du gramme)

1.1.1 - Conditionnement des zéolithes avant utilisation

L'utilisation des zéolithes sous forme de poudre est susceptible de poser des difficultés lors des analyses. De plus, lors de la filtration, il peut y avoir perte d'une partie de ces particules d'adsorbants. C'est pourquoi, les zéolithes sont pastillées à l'aide d'une presse hydraulique à une pression de 5 tonnes/cm$^2$, puis broyées et tamisées, afin d'obtenir des grains homogènes de 0,2 à 0,4 mm de diamètre ou d'une autre taille lorsque cela est nécessaire.

Les zéolithes hydrophiles (NaX, NaY et $NH_4Y$) sont activées, c'est-à-dire déshydratées à l'étuve pendant au minimum 24 heures à 100°C afin d'éliminer les traces d'eau qui pourraient ralentir l'adsorption en phase organique des produits phytopharmaceutiques.

1.1.2 - Les méthodes d'adsorption

1.1.2.1 - Adsorption statique à température ambiante (Batch simple)

Le batch simple est effectué dans un pot en verre, l'adsorption est réalisée dans l'eau ou dans un solvant organique tel que l'heptane ou l'isopentane. Les zéolithes sont mises en adsorption à température ambiante sous agitation orbitale pendant 24 heures au minimum. Les proportions, quantité de zéolithe, volume de solution, ainsi que la concentration de la solution sont variables et dépendent principalement du composé phytopharmaceutique. Ces valeurs seront indiquées par la suite.

1.1.2.2 - Adsorption statique à chaud (Batch chauffant)

Le batch chauffant est effectué grâce à un montage à reflux. Les zéolithes sont mises dans un ballon de 500 ml avec un solvant organique et le composé phytopharmaceutique. Le tout est chauffé à 60°C pendant 24 heures ou 96 heures sous agitation permanente.

Les proportions zéolithe/solvant et concentrations sont similaires aux précédentes.

1.1.2.3 - Suivi de l'adsorption des composés phytopharmaceutiques

1.1.2.3.1 - Chromatographie liquide haute performance (HPLC)

L'adsorption est suivie au cours du temps par dosage de la molécule phytopharmaceutique restant en solution. Cette quantification se fait par HPLC/UV dans les conditions suivantes :

- appareil CLHP Spectra Physics® muni d'un système d'injection automatique AS3000 et d'une pompe P4000 qui prélève jusqu'à 4 solvants (éluants) dans les proportions demandées par l'utilisateur. L'élution peut être isocratique ou suivant un gradient de solvants si la séparation envisagée le nécessite. Les solvants sont dégazés par un système de chambre à vide SCM1000.

- colonnes :

  • Supelco Discovery® RP-Amide C16 25 cm x 4,6 mm dont le diamètre des particules est de 5 $\mu$m, taux de greffage de 11 %,
  • Supelco Ascentis® RP-Amide C16 25 cm x 4,6 mm dont le diamètre des particules est de 5 $\mu$m, endcapped, taux de greffage de 19,5 %,
  • Merck® monolithique à structure bimodale Chromolith-18e 10 cm x 4,6 mm dont le diamètre des macropores est de 2 mm et celui des micropores de 13 nm.

À chaque fois, une précolonne de même nature est placée en amont pour éviter la dégradation de la colonne par les impuretés non éluées. La précolonne est elle-même précédée d'un préfiltre de porosité de 2 $\mu$m. Une fois éluées, les substances sont détectées par un spectromètre U.V. à barrette de diodes (modèle UV 6000LP). L'acquisition ainsi que le retraitement des données sont effectués par le logiciel Spectra Physics PC1000 pour OS2. Pour mener à bien la séparation, nous utilisons deux éluants : de l'eau ultra pure provenant d'un système Veolia Water (Elga) additionnée de 0,1 % d'acide trifluoroacétique (TFA) et de l'acétonitrile qualité « HPLC gradient ». Ces éluants sont filtrés sur membrane de nylon de 0,45 $\mu$m. Le type d'élution pratiqué est isocratique. Dans ce cas, le mélange des deux éluants conserve les mêmes proportions au long de l'élution. Le débit du mélange est fixé à 0,8 ml.min$^{-1}$.

### 1.1.2.3.2 - Analyse élémentaire

La charge finale des zéolithes en composé phytopharmaceutique peut être déterminée par analyse élémentaire. L'analyseur utilisé au laboratoire est un NC Analyser Flash EA 1112 series (Thermo Electron Corporation). Les éléments recherchés sont exclusivement C, H, et N.

La prise d'essais d'une masse de 10 mg minimum est placée dans une capsule d'étain. L'échantillon subit une oxydoréduction à 970°C sous courant d'hélium et d'oxygène. Les gaz passent sur une colonne chromatographique (PTFE, longueur 2 m; diamètre extérieur 6 mm; diamètre intérieur 5 mm) à 70°C. Le dioxyde de carbone et l'eau formés sont quantifiés par catharométrie (conductibilité thermique). Les différents oxydes d'azotes produits sont réduits en azote moléculaire sur du cuivre actif avant d'être quantifiés également par catharométrie.

### 1.1.2.4 - L'acide 5-chlorosalicylique (5CISA)

L'acide 5-chlorosalicylique (5-CISA), bien que non commercialisé comme composé phytopharmaceutique, présente un intérêt comme stimulateur des défenses naturelles des plantes et comme il est relativement peu encombrant stériquement, c'était un bon modèle pour notre étude. Cela nous a également permis d'avoir les premières indications sur le comportement des différents solvants utilisés et les temps de contact nécessaires pour avoir une bonne adsorption de la molécule.

### 1.1.2.4.1 - Adsorption en phase aqueuse en batch simple

Les premiers essais ont été réalisés dans l'eau ultra pure à pH = 3, afin d'avoir la forme non dissociée du composé (R-COOH). La solubilité aqueuse du 5CISA étant de 340 mg/l, les solutions utilisées sont respectivement à 200 et 300 mg/l. Les premiers tests sont réalisés avec 100 mg de NaX, le temps de contact étant de 24 heures. On obtient alors de 0,21 à 0,26 molécule de 5CISA par cage alors qu'il est théoriquement possible d'adsorber autour de 2 molécules/cage. Par conséquent, les quantités adsorbées, même si elles ne sont pas négligeables, sont loin de la saturation.

Nous avons donc choisi d'utiliser une zéolithe moins hydrophile, la $NH_4Y$. Comme précédemment, les tests sont réalisés sur 100 mg de zéolithe pendant 24 heures. Les résultats observés sont reportés dans le tableau 1 :

Tableau 1 : quantités adsorbées de 5CISA en 24 heures sur zéolithes $NH_4Y$ (100 mg) en conditions aqueuses à 2 concentrations. Agitation orbitale à 200 rpm

| Concentration initiale mg/L | Volume (cm$^3$) | Quantité adsorbée (mg de 5CISA/g de zéolithe) | Molécule/cage |
|---|---|---|---|
| 200 | 200 | 60 | 0,67 |

(suite)

| Concentration initiale mg/L | Volume (cm$^3$) | Quantité adsorbée (mg de 5ClSA/g de zéolithe) | Molécule/cage |
|---|---|---|---|
| 300 | 200 | 80 | 0,90 |

On constate effectivement une augmentation de la capacité d'adsorption sans atteindre la saturation. Nous avons alors testé d'autres techniques d'adsorption, notamment en travaillant avec un solvant hydrophobe.

1.1.2.4.2 - Adsorption en phase organique en batch simple

Une première étude a été réalisée en fonction du temps de contact, avec une concentration initiale de 300 mg/l de 5ClSA et 100 mg de NaX. Les résultats obtenus sont reportés dans le tableau 2.

Tableau 2 : quantités adsorbées de 5ClSA à 300 mg/l dans différentes phases organiques sur zéolithe NaX (100 mg). Agitation orbitale à 200 rpm avec un temps de contact variable

| Solvant | Temps de contact (heure) | Quantité adsorbée (mg de 5ClSA/g de zéolithe) | Molécule/cage |
|---|---|---|---|
| n-Heptane | 2 | 37,2 | 0,48 |
| | 6 | 65,6 | 0,85 |
| | 24 | 80,0 | 1,04 |
| Isopentane | 2 | 32,8 | 0,43 |
| | 24 | 68,0 | 0,88 |

Deux solvants ont été utilisés : l'isopentane et le n-heptane, ce dernier étant le plus performant. On constate que pour la NaX dans le n-heptane, la quantité adsorbée est similaire à celle obtenue pour la NH$_4$Y précédemment, ce qui correspond à un nombre de molécules par cage plus important. Par ailleurs, un temps de contact de 24 heures semble optimal. À la suite de ce premier test, nous avons étudié l'adsorption du 5ClSA dans le n-heptane sur trois zéolithes : NaX, NH$_4$Y, et NaY. Ces essais sont réalisés sur 24 heures, avec dans le premier cas une activation à l'étuve (100°C) et dans le second une déshydratation supplémentaire du solvant (n-heptane) servant à la préparation de la solution du 5ClSA.

Les résultats sont mentionnés dans le tableau 3:

Tableau 3 : quantités adsorbées en 24 heures de 5ClSA à 300 mg/l dans le n-heptane (déshydraté ou non) sur différentes zéolithes activées (100 mg). Agitation orbitale à 200 rpm

| Zéolithes | Activation | Activation + séchage | |
|---|---|---|---|
| NaX | 80 | 120 | mg de 5ClSA/g de Zéolithe |
| | 1,04 | 1,56 | Molécules/cage |
| NH$_4$Y | 85 | 174 | mg de 5ClSA/g de Zéolithe g |
| | 0,95 | 1,95 | Molécules/cage |
| NaY | 130 | 175 | mg de 5ClSA/g de Zéolithe |
| | 1,46 | 1,96 | Molécules/cage |

On observe ici l'influence du séchage du solvant sur l'adsorption. On constate aussi la forte augmentation d'adsorption qui est proche de 2 molécules / cage pour la NaY et la NH$_4$Y, avec une valeur légèrement inférieure pour la NaX.

Nous pouvons considérer que le but fixé étant atteint, les zéolithes ainsi chargées peuvent être étudiées en désorption.

1.1.2.5 - Le penconazole

1.1.2.5.1 - Étude de l'adsorption du penconazole dans la zéolithe NaX

L'adsorption du penconazole sur la NaX a été réalisée en batch après activation. L'activation consiste à éliminer un maximum d'eau de la zéolithe ; pour cela elle est placée à l'étuve à 100°C pour douze heures au minimum. La solution d'adsorbat, ici le penconazole à 300 mg/l dans l'heptane (200 ml), est placée au contact de la zéolithe (100 mg) sous agitation orbitale à 200 rpm. À température ambiante une première adsorption dans le n-heptane a été réalisée. Les quantités adsorbées étant faibles (29 mg/g soit 0,147 molécule par cage), l'étude a été poursuivie en élevant la température.

Deux adsorptions à 60°C ont été réalisées pendant 24 heures et 96 heures toujours dans le n-heptane.

Les résultats des analyses élémentaires obtenues sur les deux zéolithes sont reportés dans le tableau 4.

Tableau 4 : Adsorption du penconazole dans la zéolithe NaX : pourcentage de carbone et d'azote dans l'échantillon analysé et quantité déduite de penconazole adsorbé. Manipulation réalisée à partir de 200 ml d'une solution à 300 mg/l de penconazole dans l'heptane et 100 mg de zéolithe. Agitation orbitale à 200 rpm

| Temps | % carbone | % azote | Penconazole en mg/g de zéolithe | |
|---|---|---|---|---|
| | | | à partir du % de carbone | à partir du % d'azote |
| 24h | 7,41 | 1,78 | 134,9 | 120,3 |
| 96h | 8,56 | 1,90 | 155,8 | 128,4 |

On observe ici une corrélation moyenne entre les valeurs obtenues à partir des pourcentages de carbone et d'azote, ce qui indique une désorption non totale du n-heptane. Il faut noter que pour l'acide 5-chlorosalicylique les analyses de carbone étaient en parfaite corrélation avec les quantités totales désorbées. On observe une petite augmentation avec l'élévation de température, le temps de contact au-delà de 24 heures n'ayant que peu d'importance.

Pour un temps de contact identique, une augmentation de la température a permis de quadrupler la quantité de produit dans la zéolithe. À la température la plus élevée, l'augmentation du temps de contact de 72 heures n'a produit qu'un gain de 8 % de penconazole adsorbé. Le temps de contact sera donc fixé préférentiellement à 24 heures pour la suite.

1.1.2.5.2 - Étude de l'adsorption du penconazole dans la zéolithe NaY

L'obligation d'augmenter la température pour l'adsorption du Penconazole dans la zéolithe nous est apparue comme étant une difficulté supplémentaire. Aussi avons-nous repris la zéolithe NaY dont l'entrée des cavités est plus large. Une étude d'adsorption à température ambiante a été réalisée avec 500 mg de zéolithe NaY et 200 ml d'heptane contenant en solution 80 mg de penconazole. Parallèlement, la même adsorption à 60°C a été également réalisée. À température ambiante, le taux de chargement est de 94,6 mg de penconazole par g de zéolithe NaY (soit 0,65 molécule par cage). À 60 °C, le taux de chargement varie peu puisqu'il est de 103,4 mg de penconazole par g de zéolithe NaY (soit 0,7 molécule par cage).

Rappelons que le nombre de molécules par cage se calcule de la façon suivante :

nombre de moles de composé phytopharmaceutique par gramme de zéolithe x masse molaire de la zéolithe anhydre considérée (M[NaY] = 15387,1) = nombre de molécules par maille

Sachant qu'il y a 8 cages par maille, on en déduit le nombre de molécules par cage.

On constate ici une très bonne adsorption à température ambiante du penconazole dans la zéolithe NaY. Le gain obtenu à 60°C est faible voire négligeable.

À la suite de ce premier test, nous avons complété l'étude de l'adsorption du penconazole (50 mg) dans le n-heptane (50 ml) sur la zéolithe NaY (250 mg) en 24 heures, avec une activation à l'étuve (100°C) de la zéolithe et une déshydratation du n-heptane servant à la préparation de la solution de penconazole.

Dans ces conditions, la zéolithe a été chargée avec $4,2.10^{-4}$ mol.g$^{-1}$ soit 118,2 mg de penconazole par gramme de NaY. Ceci représente 6,4 molécules par maille soit 0,8 molécule par cage. L'état d'équilibre est pratiquement atteint après 6 heures, la quantité de penconazole adsorbée n'augmentant plus ensuite que très lentement. Ces conditions d'adsorption ont permis d'obtenir une concentration en penconazole par g de zéolithe supérieure à celles obtenues précédemment avec la NaX, soit près de 120 mg.g$^{-1}$.

### 1.1.2.5.3 - Étude de l'adsorption du penconazole dans la zéolithe HFAU40

Dans le cadre du développement durable, le choix du solvant se révèle important. L'heptane ne pouvant raisonnablement mener à un procédé « durable », son remplacement par l'eau a été envisagé. Compte tenu des résultats que nous venons d'exposer, ceci est peu envisageable avec des zéolithes hydrophiles. Il a donc fallu travailler sur l'hydophobie de la zéolithe. Notre choix s'est porté sur la zéolithe commerciale HFAU40 (Zeolyst international), celle-ci présentant un volume microporeux légèrement inférieur à celui de la NaX.

L'adsorption du penconazole sur HFAU40 a été réalisée également en batch dans des conditions dynamiques sous agitation orbitale à 200 rpm. Contrairement aux zéolithes hydrophiles utilisées en milieu organique anhydre, l'activation n'est plus nécessaire car nous allons travailler en milieu aqueux. La solution de penconazole à 60 mg.l$^{-1}$ dans l'eau UHQ (Ultra High Quality) (500 ml) est placée au contact de la zéolithe HFAU40 (250 mg) à température ambiante.

La quantité de penconazole adsorbé dans la zéolithe HFAU40 atteint 99 mg.g$^{-1}$ en 24 heures soit 0,504 molécule par cage.

Ce résultat reste du même ordre de grandeur que celui observé avec les zéolithes précédentes, ceci en tenant compte de son volume microporeux plus faible. De plus, son hydrophobie permet une adsorption en solution aqueuse, rendant ainsi le procédé beaucoup plus satisfaisant d'un point de vue environnemental. Forts de ce résultat, nous avons donc poursuivi nos essais d'adsorption avec la zéolithe HFAU40 dans l'eau UHQ en opérant à température ambiante et avec un temps de contact de 24 heures.

### 1.1.2.6 - L'époxiconazole

L'étude de l'adsorption de l'époxiconazole sur la zéolithe HFAU40 nous a permis de réaliser une cinétique d'adsorption et de montrer comment nous pouvions prévoir a priori le chargement de la zéolithe.

### 1.1.2.6.1 - Cinétique temporelle d'adsorption

L'époxiconazole possède une solubilité dans l'eau très faible (7 mg/l), aussi nous avons dû utiliser un mélange eau / éthanol afin d'avoir une quantité suffisamment importante de produit soluble dans des volumes raisonnables. La solubilité de l'époxiconazole dans l'éthanol (29 g/l) nous permet de réaliser les adsorptions dans une solution aqueuse contenant 30 % d'éthanol. La concentration en époxiconazole de cette solution est de 100 mg/l. L'adsorption est réalisée sur 250 mg de zéolithe HFAU40 tamisée entre 0,2 et 0,4 mm dans 100 ml de solution à 100 mg/l d'époxiconazole. L'adsorption a été suivie en faisant des prélèvements réguliers de la solution pendant 90 minutes avant de les analyser en HPLC. L'adsorption a été réalisée en batch sous agitation orbitale à 200 rpm et à température ambiante.

Malgré un encombrement stérique important ($\approx\square 370$ Å$^3$) et la présence du groupement époxyde rigide, l'époxiconazole s'adsorbe bien sur la zéolithe HFAU40. On observe une adsorption régulière de l'époxiconazole sur la zéolithe, soit 15 mg.g$^{-1}$ au bout de 10 min et 28 mg.g$^{-1}$ au bout d'une heure. Celle-ci tend vers un plateau montrant ainsi que l'état d'équilibre est proche. Après 90 minutes, la zéolithe a adsorbé plus de 80 % du produit présent en solution soit une quantité de 32 mg d'époxiconazole par gramme de zéolithe.

La solution est ensuite laissée sous agitation pendant 8 jours afin de déterminer le pourcentage d'époxiconazole à l'état d'équilibre. La quantité adsorbée à l'issue de cette période a peu varié : elle atteint 34 mg.g$^{-1}$. Ceci montre que l'équilibre, dans nos conditions expérimentales, est atteint rapidement.

### 1.1.2.6.2 - Contrôle du chargement

Nous avons préparé cinq chargements différents. Pour cela, nous avons fait varier le volume de solution d'adsorbat à concentration constante en époxiconazole (C = 124 mg/l) mis en contact avec une même quantité de zéolithe (500 mg). Les volumes étudiés sont 250, 200, 150, 100 et 50 ml. L'adsorption a été réalisée à température ambiante sous agitation orbitale à 200 rpm. De même que pour l'adsorption précédente, la solution d'adsorbat a été préparée dans une solution hydroalcoolique (30 % d'éthanol). L'adsorption a été réalisée sur une durée de 48 heures afin d'être sûrs d'avoir atteint l'état d'équilibre dans tous les échantillons.

Le tableau 5 montre que le pourcentage de produit adsorbé atteint plus de 90 % pour les volumes supérieurs à 50 ml. Le chargement de la zéolithe la plus concentrée en époxiconazole atteint 2 molécules par maille. Ceci confirme les résultats obtenus en modélisation moléculaire annonçant un chargement maximum de 2 à 3 molécules par maille selon la conformation de l'époxiconazole.

Tableau 5 : Adsorption de l'époxiconazole sur la zéolithe HFAU40. L'adsorption est réalisée en solution hydroalcoolique (30 % éthanol) à température sous agitation orbitale à 200 rpm. 500 mg de zéolithe HFAU40 tamisée entre 0,2 et 0,4 mm sont mis en contact avec une solution d'époxiconazole à 124 mg.l$^{-1}$ dans des volumes allant de 50 à 250 ml

| Volume de solution (ml) | Quantité d'époxiconazole disponible en mg (pour 500 mg de zéolithe) | Pourcentage d'époxiconazole adsorbé | Charge en mg d'époxiconazole par g de zéolithe | Nombre de molécules d'époxiconazole par maille |
|---|---|---|---|---|
| 250 | 31 | 95,1 | 59 | 2,06 |
| 200 | 24,8 | 94,8 | 47 | 1,64 |
| 150 | 18,6 | 95,4 | 35,5 | 1,24 |
| 100 | 12,4 | 93,1 | 23,1 | 0,81 |
| 50 | 6,2 | 75,8 | 9,4 | 0,33 |

Par ailleurs, la quantité d'époxiconazole adsorbée sur la zéolithe (exprimée en mg.g$^{-1}$) croit proportionnellement au volume de solution initiale. Une relation linéaire lie ces deux variables. Dans ce cas, on a y = 0,2466x - 2,5 (r$^2$ = 0,9989) où y est la quantité d'époxiconazole adsorbée exprimée en mg et x est le volume de la solution initiale exprimé en ml. Pour une concentration donnée en matière active, il est donc possible de parfaitement prédire le chargement de la zéolithe à l'état d'équilibre et donc de préparer la charge souhaitée.

1.1.2.7 - Le chlortoluron

Nous avons poursuivi nos études d'adsorption sur la zéolithe HFAU40 en nous intéressant au chlortoluron. Ce volet de l'étude nous a permis de confirmer ce qui a été exposé avec l'époxiconazole, à savoir que l'on peut parfaitement prédire et donc maîtriser le taux de chargement de la zéolithe. Les paramètres généraux de l'adsorption ayant été mis au point, il est alors nécessaire d'affiner des paramètres tels que la concentration en produit phytopharmaceutique, la quantité de zéolithe ou encore le volume de solution d'adsorbat.

1.1.2.7.1 - La concentration en produit phytopharmaceutique

Huit solutions de concentration variable en chlortoluron ont été préparées (Tableau 6) afin de réaliser l'isotherme d'adsorption du chlortoluron sur la zéolithe HFAU40. La zéolithe a été tamisée entre 0,2 et 0,4 mm. La température a été maintenue à 30°C et l'agitation est réalisée avec un agitateur orbital à 200 rpm. Comme précédemment, cette dernière valeur a été choisie car elle permet une agitation douce des zéolithes dans la solution d'adsorbat tout en maintenant un renouvellement de molécules de chlortoluron à proximité de celles-ci. Dans chaque cas, on utilise 50 mg de zéolithe dans 100 ml de solution d'adsorbat. L'adsorption est contrôlée par des prélèvements à 3, 24, et 48 heures afin d'atteindre les conditions d'équilibre.
Le tableau 6 montre que le Chlortoluron est adsorbé sur la zéolithe HFAU40 quelle que soit sa concentration initiale (jusqu'à 86 % pour la concentration initiale la plus forte).

Tableau 6 : Adsorption du chlortoluron en solution dans l'eau désionisée sur la zéolithe HFAU40 (50 mg) tamisée entre 0,2 et 0,4 mm. Conditions dynamiques en batch sous agitation orbitale à 200 rpm, à une température de 30°C et dans des flacons ambrés de 125 ml

| | | | | | | | | |
|---|---|---|---|---|---|---|---|---|
| Concentration initiale (mg/l) | 55,4 | 41,6 | 33,9 | 25,0 | 18,1 | 8,8 | 4,8 | 1,1 |
| Concentration finale - 48 heures (mg/l) | 7,4 | 5,0 | 4,0 | 3,8 | 3,1 | 1,4 | 1,3 | 0,6 |
| Pourcentage de chlortoluron adsorbé | 86,6 | 86,7 | 76,6 | 84,8 | 82,9 | 84,1 | 72,9 | 45,5 |
| Quantité en mg de chlortoluron par g de zéolithe | 107,9 | 76,7 | 61,5 | 45,6 | 34,9 | 14,4 | 8,3 | 1,5 |

L'adsorption est cependant d'autant plus faible que la concentration initiale diminue. Par ailleurs, il existe une relation parfaitement linéaire (y = 1,927x - 1,607 ; r = 0,999) entre la concentration initiale de chlortoluron présente en solution (« x » exprimée en mg.l$^{-1}$) et la quantité adsorbée (« y » exprimée en mg de chlortoluron par g de zéolithe). Cette relation est très intéressante car elle met en évidence la possibilité de contrôler le chargement de la zéolithe en faisant varier la concentration de la solution de produit phytopharmaceutique, ceci en conservant une masse de zéolithe et un volume de solution constant.

### 1.1.2.7.2 - La quantité de zéolithe

Pour cette étude, deux masses différentes de zéolithes (50 et 100 mg) ont été utilisées pour une concentration (55 mg.l$^{-1}$) et un volume de solution (100 ml) de chlortoluron invariants. La zéolithe a été tamisée entre 0,2 et 0,4 mm. La température a été maintenue à 30°C et l'agitation est réalisée avec un agitateur orbital à 200 rpm. L'adsorption est contrôlée par des prélèvements à 3, 24, et 48 heures, ce qui permet de vérifier que l'équilibre est alors atteint. Lorsque la quantité de zéolithe présente en solution est doublée (tout autre paramètre invariant), la charge finale de celle-ci est pratiquement divisée par 2 (Tableau 7).

Tableau 7 : Influence de la quantité dezéolithe sur l'adsorption du chlortoluron sur HFAU40 tamisée entre 0,2 et 0,4 mm. Le chlortoluron est en solution aqueuse de concentration et de volumes invariables. Les manipulations sont effectuées dans l'eau désionisée dans des flacons ambrés (125 ml) pour éviter une dégradation par la lumière et sous agitation orbitale à 200 rpm à 30 °C

| Quantité de zéolithe (mg) | 50 | 100 |
|---|---|---|
| Concentration finale en chlortoluron de la solution aqueuse au bout de 48 heures (mg/l) | 7,4 | 4,5 |
| Pourcentage de chlortoluron adsorbé | 86,6 | 91,8 |
| Quantité de chlortoluron adsorbée en mg par gramme de zéolithe | 107,9 | 53,9 |

Ce résultat montre qu'il est également possible de contrôler le taux de chargement en variant la masse de zéolithe mise en contact avec un volume constant d'une solution de composé phytopharmaceutique de concentration invariable.

### 1.1.2.7.3 - Le volume de solution d'adsorbat

Afin d'étudier l'effet d'un changement de volume de solution initiale, trois manipulations ont été réalisées avec une solution saturée à 60 mg.l$^{-1}$ de chlortoluron et trois volumes différents (50, 250 et 500 ml) pour une masse de zéolithe HFAU40 tamisée entre 0,2 et 0,4 mm fixée à 250 mg. L'adsorption a été réalisée à température ambiante sous agitation orbitale à 200 rpm.

Les courbes de cinétique d'adsorption du chlortoluron sur la zéolithe HFAU40 dans l'eau UHQ montrent que la quantité de produit adsorbé augmente en fonction du volume de solution saturée en chlortoluron. Cette quantité adsorbée à l'équilibre varie dans des rapports similaires au rapport de concentrations initiales. Ainsi, il existe une relation linéaire (y = 0,212x + 0,577, r = 0,999) entre la quantité de chlortoluron adsorbée à l'équilibre (« y », exprimée en mg de chlortoluron par g de zéolithe) et le volume de solution (« x », exprimé en ml). Ainsi, il également est possible de contrôler le chargement en modifiant le volume de solution initiale et ceci, en maintenant constantes la concentration en produit phytopharmaceutique et la quantité de zéolithe.

### 1.2 - Mise au point de l'adsorption de composés phytopharmaceutiques sur zéolithe HFAU40 à l'échelle pilote (quantités de l'ordre du kilogramme)

Le procédé de préparation décrit précédemment convient aux petites quantités utilisées en laboratoire (de l'ordre du gramme). La préparation de quantités plus importantes notamment pour les essais au champ a mis en évidence le besoin d'améliorer ce procédé. En effet, la faible solubilité des composés phytopharmaceutiques dans l'eau entraîne une trop forte augmentation du volume de solution aqueuse de composé phytopharmaceutique nécessaire. Nous avons donc imaginé et mis au point un autre procédé pour pallier cet inconvénient et réaliser des adsorptions sur des grandes quantités de zéolithes. Le principe général de ce procédé consiste à utiliser un faible volume d'eau dans lequel le composé phytopharmaceutique sera en large excès quant à sa solubilité. Nous sommes donc en présence d'une solution saturée en composé phytopharmaceutique avec un excès de produit non soluble. La quantité de composé phytopharmaceutique est déterminée par la dose que l'on veut appliquer (dose homologuée, demi-dose...). Suivant le chargement voulu, on introduit dans la solution différentes quantités de zéolithes déterminées à partir de l'isotherme réalisée précédemment. La zéolithe va alors adsorber le produit phytopharmaceutique en solution permettant ainsi à d'autres molécules de se solubiliser et ce jusqu'à ce que l'on ait atteint l'état d'équilibre. Dans cet exemple, le choix du volume se fait par rapport aux usages agricoles, à savoir environ 200 l épandus en pulvérisation par hectare. 4 solutions de charges différentes en chlortoluron ont été réalisées. Elles correspondent au traitement d'une parcelle de 2,5 m$^2$ à une demi-dose homologuée (DH/2) de chlortoluron soit 900 g.ha$^{-1}$.

Exemple de calcul :

Pour traiter une parcelle de 2,5 m$^2$ à 900 g de matière active.ha$^{-1}$ et à 200 l.ha$^{-1}$, il faut 225 mg de chlortoluron dans 50 ml d'eau. Selon l'isotherme d'adsorption, la quantité de chlortoluron en solution à l'équilibre pour une zéolithe chargée à 60 mg.g$^{-1}$ est de 4 mg.l$^{-1}$ soit 0,2 mg pour 50 ml. La quantité de zéolithe à introduire est donc de (225 - 0,2)/60 = 3,75 g. On aura donc au final un mélange contenant en suspension 3,75 g de zéolithe chargée à 60 mg de chlortoluron par gramme et en solution 0,2 mg de chlortoluron, le tout dans 50 ml d'eau. Cette préparation étant à l'équilibre, elle peut se conserver longtemps sans que le chlortoluron ne désorbe de la zéolithe.

Les adsorptions ont été réalisées en batch dans 50 ml d'eau désionisée à température ambiante et sous agitation orbitale à 200 rpm. L'agitation est maintenue jusqu'à la dissolution du chlortoluron présent en excès et l'atteinte d'un état d'équilibre. Le suivi de la concentration des solutions en chlortoluron se fait par HPLC et les charges exactes des zéolithes sont déterminées par analyses élémentaires. La zéolithe utilisée n'est pas tamisée et les différentes préparations obtenues sont prêtes à être utilisées en pulvérisation au sol (tableau 8). Les zéolithes ainsi préparées sont également stables dans le temps car elles sont à l'équilibre dans une solution faiblement chargée en chlortoluron, aucun risque de désorption n'étant alors envisageable.

Tableau 8 : préparation des batchs de chlortoluron. 4 solutions de charges différentes ont été réalisées. Elles correspondent au traitement d'une parcelle de 2,5 m$^2$ à une demie dose homologuée soit 900 g.ha$^{-1}$. La zéolithe HFAU40 est utilisée telle qu'elle n'est pas tamisée. Les batchs sont réalisés dans 50 ml d'eau désionisée à température ambiante sous agitation orbitale à 200 rpm

| Flacon | A | B | C | D |
|---|---|---|---|---|
| Masse de zéolithe | 2,14 | 3,75 | 7,5 | 22,5 |
| Masse de chlortoluron (mg) | 225 | 225 | 225 | 225 |
| Charge souhaitée (mg/g) | 105 | 60 | 30 | 10 |

Ce procédé permet également une mise à disposition immédiate d'une faible quantité ($q_e$) de matière active. L'adsorption a été suivie par HPLC pendant 6 heures.

Le comportement des zéolithes dans les conditions A, B et C est similaire : elles atteignent un état d'équilibre dès 3 heures de contact alors qu'en condition D, l'état d'équilibre n'est atteint qu'après cinq heures. Ces résultats sont légèrement inférieurs aux charges attendues (Tableau 9). Ceci peu s'expliquer par la présence à la surface des agrégats de zéolithe de chlortoluron non adsorbé et non solubilisé. Ainsi, ce chlortoluron n'apparaît ni dans le dosage de la solution extérieure réalisé en HPLC ni lors de la mesure de la quantité adsorbée réalisée en analyse élémentaire après filtration de la zéolithe. Cette variabilité exprimée en pourcentage est ainsi d'autant plus grande que la quantité de zéolithe introduite est importante, c'est-à-dire avec les faibles charges.

Tableau 9 : Adsorption du chlortoluron sur HFAU40 en conditions de saturation de la solution initiale. Le chargement attendu est celui calculé avec l'isotherme d'adsorption obtenu en conditions de solubilité initiale totale du chlortoluron. Le chargement réel est mesuré en analyse élémentaire. La zéolithe HFAU40 n'est pas tamisée. Les batchs sont réalisés dans 50 ml d'eau désionisée à température ambiante sous agitation orbitale à 200 rpm. La quantité initiale de chlortoluron est de 225 mg. La quantité de zéolithe HFAU40 introduite dans le milieu est variable : A 2,14 g : B 3,75 g : C 7.5 g : D 22,5 g

| Batch | Chargement attendu (mg chlortoluron par g de zéolithe) | Chargement réel (mg chlortoluron par g de zéolithe) | Erreur % |
|---|---|---|---|
| A | 105 | 92 | -12,4 |
| B | 60 | 52 | -13,3 |

(suite)

| Batch | Chargement attendu (mg chlortoluron par g de zéolithe) | Chargement réel (mg chlortoluron par g de zéolithe) | Erreur % |
|---|---|---|---|
| C | 30 | 25 | -16,7 |
| D | 10 | 7,5 | -25 |

### 1.3 - Conclusion sur l'adsorption des composés phytopharmaceutiques sur les zéolithes fauiasites

Les études d'adsorption de différents composés phytopharmaceutiques sur des zéolithes montrent que nous avons pu lever un verrou technologique majeur du projet. Les résultats dans ce domaine sont très encourageants. Plusieurs points essentiels ont pu être mis en exergue :

• L'adsorption des produits phytopharmaceutiques sur les zéolithes que nous avons validée initialement avec de grands volumes de solvant organique (heptane), a ensuite été améliorée afin d'obtenir un procédé plus respectueux de l'environnement. Ainsi, nous avons fait évoluer le procédé en passant de zéolithes hydrophiles chargées dans un solvant organique hydrophobe vers des zéolithes hydrophobes chargées dans l'eau. Dans tous les cas, nous avons travaillé en solubilisant totalement le composé phytopharmaceutique avant l'adsorption, ce qui entraîne la plupart du temps l'utilisation de grands volumes de liquides.

• Ce dernier facteur étant limitant pour la préparation de grandes quantités de produits notamment en vue des essais au champ, nous avons mis au point une évolution du procédé utilisant beaucoup moins de solvant, en l'occurrence de l'eau. L'intérêt du procédé mis au point est que les différentes formulations obtenues à l'équilibre sont prêtes à être utilisées telles quelles en pulvérisation pour des essais au champ. D'autre part, cette solution étant à l'équilibre, elle est stable (la zéolithe ne va pas relarguer de chlortoluron en solution) et peut donc se conserver.

• L'étude plus approfondie de l'adsorption nous a également permis de déterminer quels sont les paramètres permettant de contrôler le taux de chargement de la zéolithe. Ainsi, nous avons vu que pour une masse de zéolithe et une concentration de produit phytopharmaceutique invariante, la quantité de composé adsorbé est proportionnelle au volume de solution. Lorsque nous nous plaçons dans des conditions invariantes de volume et de concentration en adsorbat, la charge de la zéolithe est proportionnelle à la quantité de zéolithe utilisée. De même, lorsque la quantité de zéolithe et le volume de la solution sont invariants, la quantité de produit phytopharmaceutique adsorbée est proportionnelle à la concentration de ce dernier en solution.

Au cours de cette étude, nous avons donc réalisé plusieurs combinaisons zéolithes - produit phytopharmaceutique. 21 types de combinaisons ont été effectués et contrôlées en analyse élémentaire :

- 9 HFAU40-chlortoluron (107; 93; 61; 56; 45; 35; 14; 7; 1,5 mg.g$^{-1}$)
- 3 HFAU40-penconazole (100; 58; 31 mg.g$^{-1}$)
- 3 HFAU40-époxiconazole (44; 35; 16 mg.g$^{-1}$)
- 1 Fau(dès)-chlortoluron (35 mg.g$^{-1}$)
- 3 NaX-penconazole (29; 120; 128 mg.g$^{-1}$)
- 1 NaY-penconazole (95; 103 mg.g$^{-1}$)
- 1 NaY-chlortoluron (90 mg.g$^{-1}$)

Ce nombre de croissant de combinaison a nécessité la création d'un code de notation simple et explicite afin d'identifier rapidement la zéolithe, la matière active, la charge ainsi que la granulométrie relative à chacune d'entre elles. Un exemple de notation est comme suit : HFAU40C105_0,2-0,4 où

- HFAU40 est le type de zéolithe
- C symbolise le produit phytopharmaceutique adsorbé (ici chlortoluron)
- 105 représente la charge en mg.g$^{-1}$
- 0,2-0,4 détermine la granulométrie en mm

Le tableau 10 recense les différents éléments pouvant être utilisés pour la notation et la détermination des zéolithes qui seront utilisées pour la suite de l'expérimentation.

Tableau 10 : Eléments de détermination pour la notation des combinaisons entre une zéolithe et un produit phytopharmaceutique

| Type de zéolithe | Matière active | Charge (mg.g$^{-1}$) | Granulométrie (mm) |
|---|---|---|---|
| HFAU40<br>NaX<br>NaY<br>NaX | C (Chlortoluron)<br>P (Penconazole)<br>E (Epoxiconazole) | Variable | 0,2-0,4<br>Rien si non tamisée |

Exemple 2 - Étude de la désorption des composés phytopharmaceutiques à partir des compositions de l'exemple 1

2.1 - Les méthodes d'étude de la désorption

2.1.1 - La méthode statique (Batch)

La zéolithe chargée en composé phytopharmaceutique est mise en présence d'eau (ultra pure ou du robinet) dans un bécher dont les volumes et quantités sont indiqués ci-dessous, sous agitation, la désorption en fonction du temps étant suivie par prélèvements successifs qui sont ensuite analysés en CLHP. On obtient ainsi des courbes qui permettent d'obtenir les paramètres cinétiques à partir de la 2$^e$ loi de Fick pour les temps courts. En effet, une régression linéaire est appliquée aux premiers points de la courbe. Le coefficient directeur de la droite ainsi obtenue est k dont on peut tirer le coefficient de désorption $D/r_0^2$. Ce coefficient permet d'appréhender la vitesse de désorption d'un produit sur une zéolithe. Selon la 2$^e$ loi de Fick :

$$Q/Q_{max}(\, t) = k.t^{1/2} \text{ avec } k= 6/\, \pi^{1/2} \,.\, (D/r_0^2)^{1/2}$$

- Q: quantité adsorbée au temps t
- $Q_{max}$ : quantité maximale adsorbée
- k : pente de la courbe à l'instant 0
- t : temps
- $r_0$ : rayon des cristallites des zéolithes
- D: coefficient de diffusion

2.1.2 - La méthode en flux discontinu

Un exemple d'étude a été réalisé de cette façon dans des colonnes de verre de diamètre 40 mm fermées à la base avec un robinet. Les zéolithes chargées en 5CISA (Tableau 11), sont mises en présence de 100 ml de support (sable ou terreau) puis mises dans un mélangeur à rotation pendant 24 heures à température ambiante. Le mélange réalisé est ensuite introduit dans une colonne de verre, puis arrosé chaque jour de 25 ml d'eau du robinet. Le volume récupéré est ensuite analysé par Chromatographie Liquide Haute Performance (CLHP).

Tableau 11 : conditions de chargement des zéolithes avant servi pour la désorption en flux continu

| Zéolithes | Masse zéolithes (mg) | Solvant | Volume solvant (ml) | Masse produit (mg) | Concentration initiale (mg/L) |
|---|---|---|---|---|---|
| NaX | 100 | Heptane | 200 | 60 | 300 |
| NH4Y | 100 | Heptane | 200 | 60 | 300 |
| FAU$_{(dés)}$ | 500 | Heptane | 200 | 60 | 300 |

2.1.3 - La méthode statique filtrante sur Büchner

L'étude utilisant la méthode statique filtrante s'effectue à l'aide d'un Büchner positionné sur une fiole à vide avec un mélange zéolithe/terreau ou selon les conditions évoquées au paragraphe 2.1.2.
Comme exemple, une zéolithe (Fau$_{(dés)}$, 500 mg) est préparée avec de l'acide 5-chlorosalicylique (60 mg) dans un solvant organique (200 ml d'heptane). Les zéolithes chargées sont mélangées selon les conditions du paragraphe 2.1.2. Le mélange effectué est mis dans un Büchner et arrosé de 20 ml d'eau du robinet afin d'hydrater la préparation. Le mélange sera arrosé ensuite tous les jours avec 5 ml d'eau du robinet et 1 ml sera récupéré par aspiration sous vide journalière puis analysé par Chromatographie Liquide Haute Performance (CLHP).

2.2 - L'acide 5-chlorosalicylique (5CISA)

2.2.1 - Désorption en batch en phase aqueuse

Une première étude de désorption est réalisée en statique, sans agitation, dans l'eau. Nous avons choisi l'eau ultra pure (UHQ) qui a été comparée avec une désorption dans l'eau du robinet (ER) afin d'évaluer l'influence des ions en solution.

2.2.1.1 - Désorption de l'acide 5-chlorosalicylique présent dans la zéolithe NaX

Les concentrations initiales de la zéolithe sont respectivement de 120 mg de 5CISA par g de NaX (UHQ) et 80 mg de 5CISA par g de NaX (ER). On constate dans les deux cas une désorption rapide, puisqu'à 5 minutes (premier point de mesure) plus de 50 % du 5CISA présent dans la zéolithe est désorbé ; ceci du fait des équilibres en phase condensée assez rapides. Le pourcentage de désorption est défini par le rapport entre la quantité désorbée et la quantité initialement présente dans la zéolithe.

Cependant, la désorption apparaît par la suite beaucoup plus rapide avec l'eau du robinet. Si on compare les désorptions à 15 heures (900 minutes) : elles sont respectivement de 66 % (UHQ) et de 92 % (ER), soit une différence proche de 30 %.

2.2.1.2 - Désorption du 5CISA présent dans les zéolithes $NH_4Y$ et NaY

La même étude a été réalisée avec les zéolithes $NH_4Y$ et NaY. Les pourcentages de désorption à 15 heures sont comparés dans le tableau 12. Comme pour la NaX, on constate que dans les deux cas c'est avec l'eau du robinet que la désorption est la plus rapide. Les paramètres de désorption obtenus par la loi de Fick sont mentionnés dans le tableau 13.

Tableau 12 : pourcentage de désorption du 5CISA dans l'eau ultra pure et l'eau du robinet pour différentes zéolithes à 15 heures. Chargements (mg 5CISA/zéolithe) : $NH_4$ y (174 mg), NaY (175 mg/g), NaX (120 mg/g)

| Zéolithe | Eau ultra pure | Eau du robinet |
|---|---|---|
| $NH_4Y$ | 70 | 90 |
| NaY | 85 | 90 |
| NaX | 66 | 92 |

Tableau 13 : Valeurs des paramètres de la désorption dans l'eau (UHQ = Ultra High Quality ; ER = eau du robinet) du 5CISA pour zéolithes NaX, $NH_4$ et NaY

| Zéolithes | K ($min^{-1/2}$) | | $D/r_0^2$ ($min^{-1}$) | |
|---|---|---|---|---|
| | UHQ | ER | UHQ | ER |
| NaX | 0,18 | 0,23 | $2,8.10^{-3}$ | $4,6.10^{-3}$ |
| $NH_4Y$ | 0,04 | 0,09 | $1,4.10^{-4}$ | $7,1.10^{-4}$ |
| NaY | 0,072 | 0,07 | $4,5.10^{-4}$ | $4,3.10^{-4}$ |

On observe bien que les vitesses de désorption sont plus rapides pour la zéolithe NaX par rapport aux zéolithes Y. Ce résultat est à comparer avec le caractère le plus hydrophile de la NaX (taux d'hydratation de 30 % pour cette dernière, contre 23,5 % pour les deux autres). Comme avec la NaX, la désorption observée avec la $NH_4Y$ dans l'eau du robinet est plus rapide que dans l'eau UHQ alors qu'elle est similaire pour la NaY.

2.2.2 - Désorption du 5CISA dans l'eau en présence de supports solides

Deux supports ont été utilisés avec des techniques d'humidification différentes : du sable et un terreau horticole.

2.2.2.1 - Désorption du 5CISA de 3 zéolithes sur colonne de sable (s)

La technique utilisée est celle décrite au paragraphe 2.1.2 (méthode en flux discontinu) avec un apport journalier de 25 ml d'eau du robinet, les tests sont réalisés avec les zéolithes NaX et $NH_4Y$. Dans les deux cas, une très forte désorption (près de 85 %) du 5CISA est observée dès le premier jour.

Aussi avons-nous testé une autre faujasite industrielle, désactivée [$FAU_{(dés)}$], cette dernière ayant un caractère plus hydrophobe que les précédentes. On observe cette fois une désorption beaucoup plus lente que pour les zéolithes précédentes puisqu'il faut attendre 20 jours pour avoir une désorption de 90 % du produit initialement présent et cela même si la capacité globale est plus faible. De plus la libération est lente et progressive (30 % au jour 1, 50 % au jour 5, 80 % au jour 15, 90 % au jour 20), propriétés qui correspondent tout à fait aux propriétés des compositions.

2.2.2.2 - Désorption du 5CISA de 3 zéolithes sur colonne de terreau horticole (t)

Dans les mêmes conditions qu'en 2.2.2.1 (volume et flux), la désorption des trois zéolithes NaY, $NH_4Y$ et $FAU_{(dés)}$ a été étudiée en présence de terreau horticole. On note une désorption forte au premier jour pour la $FAU_{(dés)}$ (de l'ordre de 8 % de la charge), alors que pour les autres zéolithes (NaX et NaY), la désorption initiale est faible.

Les quantités désorbées à 20 jours restent faibles pour la NaX et la NaY, respectivement 4 et 15 % de la charge initiale, alors que la $FAU_{(dés)}$ approche les 50 % de désorption. C'est donc $FAU_{(dés)}$ qui désorbe le plus vite, la plus lente étant la NaX. Cette tendance est inverse à celle concernant le sable : cela met en évidence toute l'importance du milieu dans lequel désorbent les combinaisons zéolithes-5CISA.

L'ensemble des résultats est résumé dans le tableau 14. On constate la grande différence observée pour NaX et $NH_4Y$ entre les deux milieux, alors que celle-ci est très faible pour la $FAU_{(dés)}$.

Tableau 14 : Quantités de 5CISA désorbées au bout de 6 jours à partir de 3 zéolithes dans des colonnes de sable ou de terreau

| Zéolithe | NaX | $NH_4Y$ | $Fau_{(dés)}$ |
|---|---|---|---|
| Charge initiale (mg.g$^{-1}$) | 120 | 174 | 35 |
| Désorption colonne de sable (mg.g$^{-1}$) | 101,2 | 149,55 | 19,4 |
| Désorption colonne de terreau (mg.g$^{-1}$) | 3,49 | 22,73 | 19,01 |

2.3 - Le penconazole

Les deux zéolithes préparées en 1.1.2.5.1 (penconazole adsorbé sur la zéolithe NaX à 60°C dans l'heptane en 24 ou 96 heures, chargements 127 et 142 mg.g$^{-1}$ respectivement) ont été désorbées en batch statique en présence d'eau du robinet.

On note une désorption plus importante pour le traitement d'adsorption à 24 heures avec un maximum, puis un équilibre aux environs de 30 mg.g$^{-1}$ après 13 jours. La quantité désorbée par la zéolithe chargée durant 96 heures est le tiers de la précédente (10 mg.g$^{-1}$). De plus, dans ce dernier cas, la quantité de penconazole désorbée est bien inférieure à celle adsorbée. En effet, dans le cas d'une adsorption ayant un temps de contact de 24 heures, la quantité désorbée à l'équilibre est de 25 % de la quantité adsorbée. Dans le cas d'un temps de contact de 96 heures, la quantité désorbée à l'équilibre ne représente que 7 % de la quantité adsorbée. Cela met en évidence l'influence des conditions d'adsorption sur la quantité désorbée à l'équilibre. On voit ici une possibilité d'allongement de la cinétique de libération du penconazole au bénéfice de la plante.

Le point remarquable de cet essai est le comportement très différent de celui de l'acide 5-chlorosalicylique, ce qui met en évidence l'importance de la polarité de la molécule étudiée. En effet, pour un temps de contact de 24 heures, le pourcentage de 5CISA désorbé est de 92 % de la quantité adsorbée. Ceci s'explique par la polarité de ce produit bien supérieure à celle du penconazole. La loi de Fick appliquée à la désorption du penconazole dans l'eau du robinet donne un coefficient de diffusion d'une valeur de $1,25.10^{-5}$ min$^{-1}$, ce qui est 370 fois plus faible que le coefficient de diffusion du 5CISA ($4,6.10^{-3}$ min$^{-1}$) dans les mêmes conditions.

On constate que les molécules phytopharmaceutiques utilisées ne devront pas être trop polaires (comme le 5-CISA), sous peine de les voir désorber trop rapidement dans le milieu. Ce qui peut néanmoins être un avantage dans certaines situations.

### 2.4 - Le chlortoluron

Les combinaisons entre le chlortoluron et différentes zéolithes ont été largement étudiées quant à leurs propriétés caractérisant leur désorption. Nous avons tout d'abord comparé les zéolithes entre elles. En effet, dans le choix d'une zéolithe les paramètres de désorption s'avèrent aussi important que les paramètres d'adsorption. Les paramètres étudiés seront alors la vitesse de désorption du composé phytopharmaceutique, la quantité désorbée par rapport à la quantité adsorbée, ainsi que le coefficient de diffusion apparent de chaque combinaison. Nous avons ensuite comparé la combinaison zéolithe-produit phytopharmaceutique la plus performante avec une formulation commerciale de chlortoluron, le Tolurgan®.

Enfin, nous avons mis en évidence l'influence de plusieurs paramètres physico-chimiques sur la cinétique de désorption des produits phytopharmaceutiques, permettant ainsi de moduler la vitesse de désorption de la matière active.

### 2.4.1 - Étude des cinétiques de désorption en fonction de la zéolithe choisie

### 2.4.1.1 - Désorption dans l'eau

La désorption dans l'eau seule ne présente pas d'intérêt pratique particulier mais en revanche, cette technique permet de comparer le comportement de différentes zéolithes entre elles en un temps relativement court.

La désorption dans l'eau est réalisée en batch statique avec 50 ml d'eau UHQ à température ambiante. Des prélèvements sont ensuite effectués régulièrement et analysés en HPLC. Aucune agitation n'est mise en place afin de ne pas perturber la sortie du produit. Elles sont tamisées entre 0,2 et 0,4 mm.

Après analyse des prélèvements, chaque zéolithe présente un comportement différent :

- La NaY (chargée à 73 mg.g$^{-1}$) présente une désorption rapide jusqu'à 10 % pour atteindre ensuite lentement 15 % de chlortoluron désorbé au bout d'une vingtaine d'heures de désorption.
- La HFAU40 (chargée à 50 mg.g$^{-1}$) présente une désorption initiale relativement rapide pour atteindre un plateau à 10 % de désorption après 24 heures.

### 2.4.1.2 - Désorption du chlortoluron adsorbé sur différentes zéolithes en conditions dynamiques : colonnes de sable

Des colonnes de verre de 5,5 cm de diamètre (soit une surface de 23,76 cm$^2$) sont remplies avec 500 g de sable de Fontainebleau (sur 15 cm de hauteur) après avoir placé un coton de verre à l'extrémité inférieure de la colonne. Au cours de cette manipulation, trois zéolithes différentes chargées en chlortoluron ainsi que la matière active non formulée ont été placées en tête de colonne. La quantité déposée correspond à la dose actuellement homologuée à l'hectare (soit 1800 g.ha$^{-1}$). La quantité de produit actif à apporter à chaque colonne est donc de 0,427 mg. La colonne contenant la FAU$_{(dés)}$ a reçu une quantité initiale de matière active de 0,854 mg (le chargement de la zéolithe ayant été initialement sous estimé).

Les zéolithes étant chargées différemment, elles ont été mélangées à du sable de Fontainebleau afin de réaliser un apport similaire en masse pour chaque colonne (Tableau 15). Le chlortoluron pur représentant une trop faible masse, il a été mélangé à du kaolin afin de manipuler plus de matière lors du mélange avec le sable et avoir ainsi une meilleure homogénéité.

Chaque colonne est répétée deux fois. Les colonnes sont éluées par 50 ml d'eau désionisée (appliqués en une seule fois) par jour. La colonne est ouverte aux deux extrémités en permanence. Des prélèvements sont effectués chaque jour quand les 50 ml d'eau ont été élués. Les fractions recueillies sont analysées en HPLC.

Tableau 15 : Caractéristiques des différentes formulations utilisées et des colonnes de sable réalisées à partir de celles-ci. Le produit phytopharmaceutique est le chlortoluron. Le diamètre des colonnes est de 5,5 cm soit une surface de 23,76 cm$^2$. Les colonnes sont remplies sur une hauteur de 15 cm de sable de Fontainebleau (500 g), un coton de verre étant placé à leur extrémité inférieure. La dose appliquée en tête de colonne est la dose homologuée à l'hectare (1800 g.ha$^{-1}$) soit 0,427 mg de chlortoluron par colonne. La colonne contenant la Fau$_{(Dés)}$ a reçu une quantité initiale de matière active de 0.854 mg, le chargement de la zéolithe avant été initialement sous estimé

| Formulation | Chargement (mg de chlortoluron par g de zéolithe ou de kaolin) | Dilution dans le sable (mg de formulation par g de sable) | Quantité de chlortoluron (mg par g de sable) | Quantité de mélange déposé en tête de colonnes |
|---|---|---|---|---|
| NaY (0,2-0,4 mm) | 90 | 0,5 | 0,045 | 9,48 |
| FAU$_{(dés)}$ | 35 | 2 | 0,070 | 12,2 |
| HFAU40 (0,2-0,4 mm) | 105 | 0,5 | 0,0525 | 8,13 |
| Kaolin | 50 | 1 | 0,05 | 8,54 |

Plusieurs points peuvent être mis en évidence :

- pour la zéolithe NaY, la désorption est similaire à celle observée pour le chlortoluron technique formulé avec du kaolin, la quantité totale désorbée atteint en effet 70 % environ au bout d'une dizaine de désorptions. On peut noter une linéarité très courte (3 points) avec des pentes de droites voisines pour le chlortoluron seul ou adsorbé sur NaY. Cette dernière étant hydrophile, l'eau prend très rapidement la place de la matière active.
- en revanche, les zéolithes hydrophobes FAU$_{(dés)}$ et HFAU40 ont des domaines de linéarité beaucoup plus conséquents avec des pentes de droites au moins 10 fois plus faibles. Les désorptions sont régulières avec un bon domaine de linéarité : de 35 % à 65 % de la quantité initiale désorbés sur 18 élutions pour FAU$_{(dés)}$ et de 10 à 25 % de la quantité initiale désorbés sur 25 élutions pour HFAU40. La zéolithe HFAU40 présente toutefois une désorption plus faible et atteint son équilibre plus rapidement que la zéolithe FAU$_{(dés)}$. La désorption de FAU$_{(dés)}$ atteint 70 à 80 % au bout d'une cinquantaine d'élutions.

Cette désorption correspond au comportement désiré mais la zéolithe FAU$_{(dés)}$ utilisée seule présente un caractère phytotoxique qui ne permet pas de continuer l'étude avec cette zéolithe. Celle-ci étant un déchet de l'industrie pétrolière, il est probable que les résidus adsorbés lors de son utilisation catalytique soient toxiques pour les plantes. - Les désorptions lentes et régulières observées avec les zéolithes hydrophobes sont très intéressantes. Ceci permettrait d'accroître la rémanence du produit tout en limitant sa lixiviation par opposition au comportement de la matière active seule qui est lessivée très vite et en abondance.

Ce comportement est donc celui recherché. - Les zéolithes ayant un profil de désorption différent selon leurs propriétés physicochimiques, il est possible d'envisager un mélange de zéolithes de natures différentes afin de graduer dans le temps l'apport de matière active à la plante.

L'analyse des temps courts de cette adsorption permet de déterminer le coefficient de diffusion calculé à partir de la 2$^e$ loi de Fick :

$$Q/Q_{max} = k\sqrt{t} \text{ avec } k = 6/\sqrt{\pi} \text{ * } (D/r_0^2)^{1/2}$$

et avec :

- Q quantité désorbée à l'instant t (mg de chlortoluron désorbé par g de zéolithe)
- $Q_{max}$ quantité maximale désorbée (mg de chlortoluron désorbé par g de zéolithe)
- D coefficient de diffusion (jour$^{-1}$)
- $r_0$ taille des cristallites de zéolithes ($\mu$m)

k est la pente à l'instant t = 0, elle représente « la vitesse apparente » de la réaction. Cette constante k permet également d'atteindre « le coefficient de diffusion apparent » qui permettra de comparer sommairement les zéolithes entre elles. En effet, La détermination de D est difficile car la taille des cristallites des zéolithes est peu accessible, de ce fait le coefficient déterminé est $D/r_0^2$ que l'on nommera coefficient de diffusion apparent. Les comparaisons entre différentes zéolithes restent possibles car ces zéolithes industrielles possèdent toutes des tailles de cristallites d'un même ordre de grandeur. Ici, le pas de temps t est le jour, une seule désorption ayant été réalisée par jour. Les coefficients de diffusion apparents mettent en évidence plusieurs points :

- La zéolithe hydrophile NaY présente comme attendu un coefficient de diffusion apparent (0,158 $\mu m^2.j^{-1}$) environ 13 fois plus important que celui de la zéolithe FAU$_{(dés)}$ (0,0125 $\mu m^2.j^{-1}$), et jusqu'à 40 fois plus important que celui de la zéolithe HFAU40 (0,0042 $\mu m^2.j^{-1}$).
- Les coefficients de diffusion apparents relatifs aux deux zéolithes hydrophobes sont du même ordre, bien que celui de FAU$_{(dés)}$ soit jusqu'à 3 fois plus important que celui de HFAU40, et ils semblent indiquer une désorption relativement lente et régulière.

2.4.2 - Comparaison du lessivage du chlortoluron adsorbé sur zéolithe HFAU40 ou formulé commercialement (Tolurgan®)

Cette manipulation est réalisée afin d'étudier comparativement le comportement au lessivage du chlortoluron adsorbé sur la zéolithe HFAU40 ou formulé commercialement (Tolurgan®) en le déposant en tête d'une colonne de vermiculite.

Des colonnes de verre de 5,5 cm de diamètre (soit une surface de 23,76 cm$^2$) sont remplies avec de la vermiculite sur une hauteur de 15 cm après avoir placé un coton de verre à l'extrémité inférieure de la colonne. Au cours de cette manipulation, une zéolithe HFAU40 tamisée (0,2-0,4 mm) chargée en chlortoluron (105 mg.g$^{-1}$) ainsi que du Tolurgan® ont été placés en tête de colonne. La quantité de produit actif déposée sur les colonnes est de 0,427 mg par colonne ayant reçu une zéolithe (soit la dose homologuée à l'hectare, 1800 g.ha$^{-1}$) et de 0,342 mg par colonne ayant reçu le Tolurgan® (soit 80 % de la dose homologuée, correction après analyse HPLC de la solution appliquée sur les colonnes). Les zéolithes ont été mélangées à du sable de Fontainebleau afin de réaliser un dépôt suffisamment volumineux en tête de colonne. Le Tolurgan® a été incorporé sous forme liquide. Chaque colonne est répétée deux fois. Les colonnes sont éluées avec 60 ml de solution nutritive habituellement utilisée pour la culture hydroponique des tomates (composition Tableau 16). Cette quantité est appliquée en une seule fois robinet ouvert. Les fractions sont analysées par HPLC.

Tableau 16 : composition de la solution nutritive pour tomates

| Éléments | Concentration |
|---|---|
| $KNO_3$ | 3 mmol.l$^{-1}$ |
| $KH_2PO_4$, $Ca(NO_3)_2$, $MgSO_4$, 7 $H_2O$ | 0,5 mmol.l$^{-1}$ pour chaque élément |
| $(NH_4)_6Mo_7O_{24}$ | 1 $\mu$mol.l$^{-1}$ [Mo] |
| $H_3BO_3$ | 30 $\mu$mol.l$^{-1}$ |
| $MnSO_4$,$H_2O$ | 5 $\mu$mol.l$^{-1}$ |
| $NH_4(NO_3)$ | 1,12 $\mu$mol.l$^{-1}$ |
| $ZnSO_4$, 7 $H_2O$, $CuSO_4$, 5 $H_2O$ | 1 *mol.l$^{-1}$ pour chaque élément |
| Séquestrène [6 % Fe] | 100 $\mu$mol.l$^{-1}$ |

La comparaison entre la formulation commerciale et la formulation zéolithe met en évidence plusieurs atouts de cette dernière :

- Après 15 désorptions, 80 % du chlortoluron présent initialement sous forme de Tolurgan® est retrouvé à la sortie de la colonne alors que la même molécule adsorbée sur HFAU40 n'est éluée dans le même temps qu'à hauteur de 40 %.
- De même, le domaine de linéarité est plus important avec le procédé selon l'invention (au moins 22 désorptions) qu'avec la formulation commerciale (10 désorptions) avec une pente de la droite environ 2 fois plus faible. Cela traduit un relargage beaucoup plus lent et régulier de la matière active lorsqu'elle est adsorbée sur la zéolithe HFAU40. Notons que dans ce cas l'eau contenait une forte quantité de minéraux destinés à la nutrition des plantes (Tableau 16).

Exemple 3 - Étude de l'efficacité en serre des combinaisons zéolithes-produit phytopharmaceutique - Étude des caractéristiques de la libération du principe actif

Ayant démontré la faisabilité de l'adsorption de composés phytopharmaceutiques sur des zéolithes ainsi que leur relargage à partir de ces dernières, nous nous sommes intéressés à l'efficacité biologique des combinaisons zéolithe - produit phytopharmaceutique réalisées. Dans un premier temps, nous avons travaillé en conditions contrôlées, c'est-à-dire en serre.

### 3.1 - Le chlortoluron

### 3.1.1 - Étude préliminaire avec différentes zéolithes

Nous avons tout d'abord étudié l'efficacité du chlortoluron combiné à différentes zéolithes. Des tests herbicides ont été mis en place sur plants de tomates (*Lycopersicon esculentum* var. Montfavet H 63/5). Bien que la tomate ne soit pas une plante que l'on cherche à éliminer dans la pratique, nous avons retenu cette plante car d'une part elle est sensible au chlortoluron et d'autre part les graines sont suffisamment grosses pour être facilement comptées et manipulées une par une lors des semis. Les objectifs de ce test sont multiples :

- Évaluer l'effet herbicide du chlortoluron combiné à 3 zéolithes différentes NaY, HFAU40 et FAU$_{(dés)}$ en comparaison à une formulation commerciale.

Le chlortoluron a été utilisé sous 5 formes différentes : matière technique non formulée, une formulation commerciale à 500 g de chlortoluron par litre (Tolurgan®), une combinaison zéolithe NaY - chlortoluron chargée à 90 mg de matière active par g de zéolithe tamisée entre 0,2 et 0,4 mm (NaYC090_0,2-0,4), une combinaison zéolithe HFAU40 - chlortoluron chargée à 105 mg de matière active par g de zéolithe et une combinaison FAU$_{(dés)}$ - chlortoluron chargée à 35 mg de matière active par g de zéolithe. Afin de tester son innocuité, cette dernière zéolithe sera également testée seule. La quantité appliquée est la dose homologuée à l'hectare (DH) soit 1800 g.ha$^{-1}$ pour chaque formulation, à l'exception de la FAU$_{(dés)}$ qui sera traitée avec une double dose, la charge ayant été sous-estimée initialement. Les tests sont réalisés dans des pots de 9,5 cm de diamètre soit une surface de 71 cm$^2$. Ainsi la quantité de chlortoluron appliquée par pot est de 1,276 mg à l'exception des lots contenant la combinaison FAU$_{(dés)}$ - chlortoluron qui en ont reçu 2,549 mg. Trois répétitions ont été réalisées pour les formulations de chlortoluron technique et commercial et cinq pour les combinaisons zéolithe - chlortoluron.

Dans chaque pot, 19 graines de tomate ont été semées sur de la vermiculite à l'aide d'un gabarit afin d'avoir un espacement régulier. Le chlortoluron technique et sa formulation commerciale sont appliqués en solution. 30 ml de solution à 42,53 mg.l$^{-1}$ de matière active (contrôle par HPLC) sont répartis uniformément à la surface du pot. Les combinaisons zéolithes - chlortoluron ont été appliquées en mélange sableux (10 g) contenant 0,1275 mg de chlortoluron par gramme de sable pour les combinaisons réalisées avec NaY et HFAU40 et 0,2549 mg de chlortoluron par gramme de sable pour la combinaison avec FAU$_{(dés)}$. Le mélange est réalisé dans un mélangeur à poudre pendant 30 minutes. Les pots ainsi traités seront également arrosés de 30 ml d'eau du robinet. Par la suite, les pots sont arrosés uniformément par une fine pluie d'eau du robinet lorsque cela est nécessaire. Une surveillance des pots est réalisée régulièrement et le comptage définitif s'effectuera au jour 21. Le tableau 17 récapitule les conditions opératoires mises en place pour cette manipulation.

Tableau 17 : différents protocoles mis en place pour l'étude de l'efficacité de différentes formulations de chlortoluron sur des plantules de tomate : chlortoluron technique (CT), formulation commerciale à 500 g de chlortoluron par litre (Tolurgan®) et trois combinaisons zéolithe - chlortoluron. Les zéolithes utilisées sont NaY: HFAU40, Fau$_{(Dés)}$. Le traitement se fait à dose homologuée (DH) soit 1 800 g, ha$^{-1}$ (soit 1,275 mg de chlortoluron par pot) sauf pour Fau$_{(dés)}$ pour laquelle la dose a été doublée (soit 2,549 mg de chlortoluron par pot). Le traitement se fait sur des pots de 71 cm$^2$ de surface dans lesquels 19 graines sont semées uniformément dans de la vermiculite. Les solutions de chlortoluron et de Tolurgan® sont réalisées avec de l'eau du robinet. Les combinaisons zéolithe -chlortoluron sont mélangées à du sable de Fontainebleau

| Formulation | Chargement en chlortoluron par formulation (mg.l$^{-1}$ ou mg.g$^{-1}$) | Dilution dans le sable en mg de formulation par g de sable | Quantité de chlortoluron en mg par g de sable | Quantité de mélange par pot |
|---|---|---|---|---|
| CT | 42,53 | - | - | 30 ml |
| Tolurgan® | 42,53 | - | - | 30 ml |
| NaY | 90 | 1,4 | 0,1275 | 10 g puis arrosage par 30 ml d'eau |

(suite)

| Formulation | Chargement en chlortoluron par formulation (mg.l$^{-1}$ ou mg.g$^{-1}$) | Dilution dans le sable en mg de formulation par g de sable | Quantité de chlortoluron en mg par g de sable | Quantité de mélange par pot |
|---|---|---|---|---|
| HFAU40 | 105 | 1,2 | 0,1275 | 10 g puis arrosage par 30 ml d'eau |
| Fau$_{(dés)}$ | 35 | 7,3 | 0,2549 | 10 g puis arrosage par 30 ml d'eau |
| Fau$_{(dés)}$ | 0 | 7,3 | 0 | 10 g puis arrosage par 30 ml d'eau |

L'effet herbicide est exprimé en % et se calcule de la façon suivante :

$$\text{Effet herbicide} = (\text{plantes mortes} / \text{plantes germées}) \times 100$$

Toutes les formulations ont un effet herbicide à 100 % après 21 jours. Ceci montre que les combinaisons zéolithe-chlortoluron sont toutes au moins aussi efficace que le chlortoluron sous sa forme technique ou formulé commercialement. La matière active a donc été désorbée en quantité suffisante pour avoir un effet biologique satisfaisant.

3.1.2 - Influence de la charge en matière active sur l'effet herbicide

L'objectif de ce test est d'apprécier l'influence de la charge en matière active de la zéolithe sur l'effet herbicide du chlortoluron à la dose homologuée DH (1800 g.ha$^{-1}$). Une comparaison est effectuée avec une formulation commerciale de chlortoluron (Klortosan®, 500 g de chlortoluron par litre). Compte tenu des résultats des expériences de désorption et du test herbicide en 3.1.1, nous avons retenu la combinaison entre le chlortoluron et la zéolithe commerciale hydrophobe HFAU40.

Trois charges différentes ont été testées : 93, 61 et 7 mg de chlortoluron par g de zéolithe HFAU40 tamisée entre 0,2 et 0,4 mm avant adsorption. Les zéolithes contenant le chlortoluron ont été diluées dans du sable (30 minutes au mélangeur à poudre) afin d'être appliquées de façon homogène. Les mélanges sont alors répartis uniformément à la surface des pots puis on procède à un arrosage initial avec 30 ml d'eau du robinet. Le chlortoluron formulé commercialement a été appliqué en solution aqueuse préparée avec de l'eau du robinet. 30 g de sable sont ensuite répartis par soucis d'homogénéité des traitements mais aussi pour favoriser les comptages ultérieurs. Les tests sont réalisés dans des pots de 9,5 cm de diamètre soit une surface de 71 cm$^2$. Ainsi, la quantité de chlortoluron appliquée par pot est de 1,276 mg pour la dose homologuée. 4 répétitions par formulation ont été effectuées.

Dans chaque pot, 19 graines de tomate ont été semées sur de la vermiculite à l'aide d'un gabarit afin d'avoir un espacement régulier. Le tableau 18 présente les caractéristiques des différentes modalités appliquées.

Tableau 18 : conditions opératoires mises en place pour l'étude de l'influence de la charge en matière active de la zéolithe sur l'effet herbicide. La zéolithe est HFAU40 tamisée entre 0,2 et 0,4 mm ; celle-ci est chargée à 93,61 ou 7 mg de chlortoluron par g de zéolithe. La formulation commerciale Klortosan® (500 g de chlortoluron par litre) est utilisée comme témoin d'efficacité. Le traitement se fait à dose homologué (DH, 1 800 g, ha$^{-1}$ soit 1,275 mg de chlortoluron par pot de 71 cm$^2$ de surface) Dans chaque pot, 19 graines de tomates (*Lycopersicon esculentum* var. Montfavet H 63/5) sont semées uniformément dans la vermiculite. Les solutions de Klortosan® sont réalisées dans l'eau du robinet avant application. Les combinaisons zéolithe - chlortoluron sont mélangées à du sable de Fontainebleau avant épandage suivi d'un arrosage

| Dose | Formulation | Chargement de chlortoluron par formulation | Dilution dans le sable en mg de formulation par g de sable | Quantité de chlortoluron en mg par g de sable | Quantité de mélange à appliquer par pot |
|---|---|---|---|---|---|
| DH 1800 g.Ha$^{-1}$ | Klortosan® | 42,53 mg.l$^{-1}$ | - | - | 30 ml |
| | HFAU40C093 | 93 mg.g$^{-1}$ | 1,4 | 0,13 | 9,8 g + 30 ml |
| | HFAU40C061 | 61 mg.g$^{-1}$ | 2,2 | 0,13 | 9,8 g + 30 ml |
| | HFAU40C007 | 7 mg.g$^{-1}$ | 17,7 | 0,13 | 9,8 g + 30 ml |

Pour chaque pot, le nombre de plantes germées a été noté au jour 8 et ceci sert de référence par la suite. Les plantes tuées par l'herbicide ont ensuite été comptées du jour 12 au jour 18 suivant le semis.

Le pourcentage de mortalité est donc calculé individuellement pour chaque pot et les résultats obtenus (moyenne des 4 pots) sont présentés dans le tableau 19. On observe un effet retard lorsque le chlortoluron est formulé avec des zéolithes par rapport à la formulation commerciale, effet d'autant plus accentué que la charge est faible. Au jour 18, toutes les plantes sont tuées avec tous les traitements.

Tableau 19 : effet herbicide (exprimé en % de mortalité) d'une combinaison entre la zéolithe HFAU40 et le chlortoluron à trois chargements différents (7, 61 ou 93 mg.g$^{-1}$) avec une application à dose homologuée (1800 g.Ha$^{-1}$, soit 1,275 mg de chlortoluron par pot de 71 cm$^2$ de surface). La formulation commerciale Klortosan® est utilisée comme témoin d'efficacité. Dans chaque pot, 19 graines de tomate (*Lycopersicon esculentum* var. Montfavet H 63/5) sont semées dans la vermiculite et la notation prend en compte les plantes mortes par rapport à celles qui ont germé au départ

| Jour du traitement | HFAU40C007 | HFAU40C061 | HFAU40C093 | Klortosan® |
|---|---|---|---|---|
| 8 | 0 | 0 | 0 | 0 |
| 12 | 36 | 59 | 58 | 81 |
| 13 | 68 | 83 | 85 | 95 |
| 14 | 80 | 90 | 93 | 97 |
| 15 | 95 | 97 | 99 | 100 |
| 16 | 96 | 99 | 99 | 100 |
| 17 | 99 | 100 | 100 | 100 |
| 18 | 100 | 100 | 100 | 100 |
| 19 | 100 | 100 | 100 | 100 |
| 20 | 100 | 100 | 100 | 100 |

3.2 - L'époxiconazole

3.2.1 - Mise en place de l'essai

Après les différents essais que nous venons d'exposer avec le chlortoluron, nous avons mené des tests avec l'époxiconazole combiné à la zéolithe HFAU40. Contrairement au chlortoluron que nous avons toujours appliqué au sol comme ce que nous avions prévu initialement, l'époxiconazole adsorbé sur HFAU40 a été utilisé en pulvérisation foliaire. Il s'agit du mode traditionnel d'application de la matière active. Nous avons donc testé l'efficacité de la combinaison HFAU40-époxiconazole sur une maladie commune du rosier, l'oïdium.

Les formulations testées sont au nombre de 4 : Opus® (produit commercial) ; HFAU40E50_0-0,2; HFAU40E40_0-0,2; HFAU40E19_0-0,2. La granulométrie fine est ici imposée pour permettre la pulvérisation.

Elles sont appliquées soit à la dose homologuée (DH) de 125 g.ha$^{-1}$, soit à DH/2, soit 62,5 g.ha$^{-1}$. Les tests sont réalisés avec des rosiers bouturés sur du terreau en pot (250 pots de 0,52 l) et taillés une fois pour limiter la floraison et augmenter la surface foliaire. L'arrosage quotidien se fait par marée de solution nutritive. Ces rosiers n'ont subi aucun traitement préalable. De fait, ils ont naturellement été atteints d'oïdium et de façon suffisamment homogène pour réaliser le test sans provoquer de contamination supplémentaire.

Toutefois, nous avons éliminé au départ les pots dont les rosiers présentent une petite surface foliaire et ceux moins atteints d'oïdium. 20 rosiers pour chaque modalité ont finalement été utilisés. Au lendemain du traitement fongicide, nous avons procédé à un traitement acaricide (Vertimec®, 18 g.l$^{-1}$ abamectine), puis les rosiers ont été recouverts d'une bâche de bouturage pour augmenter le taux d'humidité dans l'air et aussi provoquer une condensation nocturne. Ceci est pratiqué afin de favoriser à la fois la propagation de l'oïdium et la désorption de la matière active depuis les combinaisons zéolithe-époxiconazole.

Un volume de 700 ml de solution suffit pour pulvériser abondamment 20 rosiers à l'aide d'un pulvérisateur manuel, y compris le dessous des feuilles. Chaque lot est traité séparément, en dehors de la chapelle de culture pour éviter des traitements croisés. De plus, entre chaque traitement, le pulvérisateur est soigneusement rincé.

• L'Opus® est la spécialité commerciale contenant 125 g.l$^{-1}$ d'époxiconazole sous forme de suspension concentrée avec une densité de 1,04 g.l$^{-1}$. Par ailleurs, l'index phytosanitaire préconise une application de 1000 l.ha$^{-1}$. Nous avons donc préparé les dilutions suivantes :

- Pour la dose homologuée (DH) de 125 g.ha$^{-1}$ (ou 125 mg.l$^{-1}$), nous diluons 0,7 ml (ou 728 mg) d'Opus® dans 700 ml d'eau du robinet ;
- Pour DH/2, le traitement est de 364 mg d'Opus® dans 700 ml d'eau du robinet.

• La quantité de zéolithes additionnée à 700 ml d'une solution aqueuse d'Agral 90 à 0,5 ml.l$^{-1}$ (agent mouillant favorisant l'étalement des gouttelettes de pulvérisation sur les feuilles) est calculée en fonction de la charge de la zéolithe en époxiconazole (tableau 20).

Tableau 20 : quantités de zéolithes nécessaires en fonction deleur chargement en époxiconazole pour la réalisation de 700 ml de solution correspondant à la dose homologuée (125 g.Ha$^{-1}$) ou à la moitié de celle-ci. Un agent mouillant (Agral 90) est ajouté à raison de 0,5 ml.l$^{-1}$ de solution afin de favoriser l'accrochage du traitement sur les feuilles

| | HFAU40E50_0,02 | HFAU40E40_0-0,2 | HFAU40E19_0-0,2 |
|---|---|---|---|
| Charge d'époxiconazole (mg par g de zéolithe) | 50 | 40 | 19 |
| Quantité de zéolithe pour 700 ml de solution à DH (g) | 1,75 | 2,18 | 4,605 |
| Quantité de zéolithe pour 700 ml de solution à DH/2 (g) | 0,857 | 1,094 | 2,303 |

Le mélange alors obtenu est bien agité avant pulvérisation.

• Trois types de témoins permettront de comparer l'efficacité des traitements :

- des rosiers non traités afin de suivre l'évolution de la maladie (8 pots) ;
- des rosiers traités avec une solution d'Agral 90 (0,5 ml.l$^{-1}$) pour confirmer son innocuité et son inefficacité (8 pots) ;
- des rosiers traités avec 700 ml de solution d'Agral 90 additionnée de 2 g de zéolithes de granulométrie 0-0,2 mm, ceci étant le témoin négatif de nos traitements (16 pots).

• Dans le but de limiter un effet climatique pouvant influer sur l'efficacité du traitement, nous avons divisé chaque lot de 20 pots traités en 4 répétitions de 5 pots, disposés sur 2 tables de cultures différentes. Les 4 répétitions ont la même disposition. Afin de maintenir une pression de maladie, les témoins, également partagés entre les 4 répétitions, sont disséminés au milieu des pots traités, leur emplacement au coeur du lot ayant été tiré au sort.

- L'oïdium est noté sur deux paramètres, toutes les semaines et par la même personne. Puisqu'il n'est pas possible de réaliser ces évaluations sur la globalité du feuillage, seulement la tige portant une étiquette d'identification (placée aléatoirement avant le traitement) est notée. Pour l'appréciation du premier critère, seuls les étages foliaires de la tige touchés par la maladie sont pris en compte. Pour ces feuilles infestées, on estime visuellement la surface touchée par la maladie (recouverte de mycélium) par rapport à la surface totale. Le second critère rend compte, toujours pour la même tige, du rapport entre le nombre d'étages foliaires atteints par l'oïdium sur le nombre total d'étages présents. Les notations ont été faites aux jours 1, 8 et 15 après le traitement. Deux doses de matière active ont été testées : la dose homologuée DH et la moitié de cette dose, DH/2.

Rappelons les effectifs de l'étude :

- 8 pots témoins non traités ;
- 8 pots témoins traités avec 0,5 ‰ d'Agral90;
- 16 pots témoins traités avec 0,5 ‰ d'Agral90 et HFAU40 vide ;
- 20 pots traités avec Opus® ;
- 20 pots traités avec 0,5 ‰ d'Agral90 et HFAU40E50;
- 20 pots traités avec 0,5 ‰ d'Agral90 et HFAU40E40;
- 20 pots traités avec 0,5 ‰ d'Agral90 et HFAU40E19.

L'ensemble de ces résultats a fait l'objet d'analyses statistiques.

3.2.2 - Effet des différents traitements d'époxiconazole à dose homologuée

Chez le témoin non traité, on observe une évolution croissante de la couverture d'oïdium durant les 15 jours (de 12,5 à 30 %) et dans le même temps, celui-ci s'étend sur la plante (56,5 à 81 %). En présence d'Agral90, avec ou sans zéolithes, ces phénomènes d'expansion semblent légèrement atténués si on se réfère aux médianes. Cependant, cette atténuation n'est absolument pas significative. Le témoin que nous considérons dans l'analyse qui suit est le témoin Agral/zéolithe. Seules les observations statistiquement significatives sont commentées.

- Analyse de l'évolution de la surface foliaire couverte par l'oïdium.

Au jour 1, aucun traitement n'a un effet significativement différent de celui du témoin Agral/zéolithe. En revanche, la différence entre les rosiers non traités et ceux traités avec de l'époxiconazole, quelle que soit sa forme, est réellement significative. Pourtant, on ne peut pas différencier les rosiers ayant reçu de l'Agral avec ou sans zéolithes de ceux qui sont traités. Ceci indique donc que les traitements ont déjà un effet sur l'oïdium qui est en partie dû à la présence de mouillant, l'oïdium étant un champignon de surface. La matière active n'a pas encore eu d'effet dans un temps aussi court.
Au jour 8, le seul traitement significativement efficace par rapport au témoin Agral/zéolithe est celui réalisé avec HFAU40E50. Toutefois, si on compare l'effet des 4 traitements à celui des rosiers non traités, on constate que l'époxiconazole conserve globalement son efficacité, sauf lorsqu'il est apporté sous forme de HFAU40E19.
Au jour 15, les rosiers traités avec Opus®, HFAU40E50 et HFAU40E40 sont significativement moins atteints que les témoins Agral/zéolithe ou que les rosiers non traités.

- Analyse de l'étendue de l'oïdium

Au jour 1, les rosiers traités avec HFAU40E40 ont une maladie moins étalée (13 %) sur la plante que sur les témoins Agral/zéolithe (33,5 %). On observe la même chose en les comparant aux rosiers non traités (56,5 %).
Au jour 8, l'oïdium est moins étendu chez les plantes traitées par HFAU40E50 (10 %) et HFAU40E40 (10,5 %) par rapport aux témoins Agral/zéolithe (39 %) ou aux rosiers non traités (62 %).
Au jour 15, une différence est relevée chez les mêmes traitements qu'au jour 8 et les rosiers traités avec Opus® (23,5 %) ont également un oïdium plus contenu que les témoins Agral/zéolithe (60 %).

- Conclusion sur l'efficacité des différents traitements à DH

Il ressort de ces analyses que les 3 lots traités sans époxiconazole ne peuvent statistiquement pas être différenciés. Cependant, ils montrent que l'oïdium s'est bien développé et permet de valider l'ensemble du test.
En s'appuyant sur le pourcentage de surface foliaire atteinte, l'efficacité des fongicides Opus®, HFAU40E50 et HFAU40E40 ne peuvent pas être discernés. En revanche, en s'appuyant sur l'étendue de la maladie, on constate qu'aux jours 1 et 8, les traitements HFAU40E50 et HFAU40E40 sont plus efficaces que le traitement commercial. Seule la zéolithe HFAU40E19 ne présente plus d'efficacité à partir du jour 8. Nous pouvons alors en déduire qu'une faible charge d'époxiconazole est insuffisante dans notre test : le relargage de matière active n'est probablement pas suffisant au départ pour endiguer la maladie. Quant aux zéolithes chargées en époxiconazole à 50 ou 40 mg.g$^{-1}$, elles ont une activité biologique au moins aussi intéressante que le traitement commercial.

### 3.2.3 - Effet des différents traitements d'époxiconazole à dose homologuée divisée par 2

Les témoins de ce test sont communs à ceux utilisés ci-dessus pour la dose homologuée.

• Analyse de l'évolution de la surface foliaire couverte par l'oïdium

Au jour 1, on observe que les rosiers non traités sont significativement plus atteints (12,5 %) que les autres lots (3 à 5 %). Ceci est probablement dû à l'absence d'Agral90 qui, du fait de son action mouillante, limite la croissance mycélienne. Par ailleurs, les rosiers traités avec HFAU40E40 sont un peu plus atteints (5 %) que ceux traités avec Opus® (3 %) et par comparaison aux rosiers non traités, 3 traitements sont efficaces : Opus®, HFAU40E50 et HFAU40E19.

Au jour 8, le traitement commercial Opus® possède une efficacité significative (0 % contre 5 % chez le témoin Agral/zéolithe). Si on compare l'effet de nos traitements aux rosiers non traités, HFAU40E50 et HFAU40E19 s'avèrent autant efficaces que l'Opus® (5 - 5 et 0 %, respectivement contre 30 % chez les témoins non traités).

Au jour 15, alors qu'Opus® conserve son efficacité, il s'avère aussi plus efficace que HFAU40E40, tandis que HFAU40E50 n'est efficace que par comparaison aux rosiers non traités.

• Analyse de l'étendue de l'oïdium

Au jour 1, on observe que seul l'Opus® présente une efficacité, par rapport au témoin Agral/zéolithe comme par rapport aux rosiers non traités. Cependant, il est difficile d'établir une conclusion pour un délai aussi court après le traitement.

Au jour 8, Opus® conserve la même efficacité et le traitement avec HFAU40E40 est significativement moins efficace que le produit commercial.

Au jour 15, alors qu'Opus® conserve son efficacité, les traitements HFAU40E40 et HFAU40E19 ont perdu de leur activité par comparaison à l'effet d'Opus.

• Conclusion sur l'efficacité des traitements à DH/2

Au regard des résultats obtenus par observation de la surface foliaire atteinte, il est impossible de discerner les différents traitements à base de zéolithes, si ce n'est HFAU40E40 qui se montre très légèrement moins efficace. Globalement, la zéolithe la plus chargée d'époxiconazole a une activité très proche de celle du traitement commercial. La zéolithe la moins chargée, HFAU40E19, montre une action également satisfaisante. Si l'on se réfère à l'étendue de la maladie, les différentes combinaisons époxiconazole-zéolithe HFAU40 semblent voisines du point de vue de leur activité et en léger retrait par rapport à la formulation commerciale. À l'instar de ce qui avait été observé avec la zéolithe faiblement chargée lors du traitement à DH, il est probable que la quantité de matière active libérée ne soit pas suffisamment élevée, tout au moins au début, pour un meilleur contrôle de la maladie.

### 3.2.4 - Efficacité fongicide des combinaisons zéolithe HFAU40/époxiconazole

Du fait de la faible solubilité de l'époxiconazole dans l'eau et de la forte hydrophobicité de la zéolithe HFAU40, nous pouvions douter de la désorption de nos combinaisons *in situ*. Ce test nous a pourtant montré que toutes nos zéoltihes ont une action fongicide satisfaisante.

Finalement, sur l'ensemble de cet essai en serre, nos combinaisons zéolithes-époxiconazole ont un effet satisfaisant, voire très satisfaisant pour HFAU40E50. L'efficacité des combinaisons paraît légèrement moindre que celle du traitement commercial. Il faut cependant garder en mémoire qu'Opus® est une suspension concentrée contenant des adjuvants facilitant la pénétration du principe actif, tandis que nos produits sont utilisés avec seulement un mouillant.

Par ailleurs, l'utilisation d'une zéolithe un peu moins hydrophobe permettrait certainement une libération plus rapide de la matière active et un probable gain d'activité. Une optimisation de la formulation de nos combinaisons (zéolithe moins hydrophobe et adjuvants lors de l'épandage) laisse donc espérer de belles perspectives lors d'une application en pulvérisation foliaire, mode d'application qui n'avait pas été préalablement envisagé.

Exemple 4 - Étude de l'efficacité en plein champ de combinaisons entre la zéolithe HFAU40 et un herbicide, le chlortoluron

Après les essais effectués en serre, nous avons testé notre procédé en plein champ ; cela a nécessité de préparer d'importantes quantités de produits. La combinaison HFAU40-chlortoluron a été testée par application au sol et l'association HFAU40-époxiconazole a été utilisée en pulvérisation foliaire.

4.1 - Premier essai d'utilisation des combinaisons zéolithes HFAU40-chlortoluron en désherbage du blé d'hiver

Un premier essai a été mis en place au cours de l'hiver 2008-2009 sur un site pilote. Ces terrains sont situés à Saint Sauvant (Vienne).

4.1.1 - Caractéristiques de la terre

La terre utilisée est une terre agricole, une « terre rouge à châtaigniers ». Il s'agit de sols limonosableux légèrement lessivés pouvant comporter une forte proportion de rognons de silex reposant sur un substrat calcaire.

4.1.2 - Adsorption des produits phytopharmaceutiques testés sur la terre des essais

Avant de réaliser les tests de plein champ, nous avons réalisé une étude préliminaire concernant l'adsorption des composés phytopharmaceutiques appliqués au sol lors des essais. En effet, certains types de sols peuvent les adsorber, entraînant ainsi une modification de leur efficacité. Afin d'évaluer l'importance de ce phénomène, nous avons réalisé des expériences en laboratoire d'adsorption du chlortoluron (seul composé à être appliqué au sol dans le cadre de ces essais) sur la terre du champ où il sera épandu.

Selon Leake, 1991, il est recommandé de prendre un rapport massique solution/sol entre 5/1 et 20/1. Le rapport utilisé pour cette manipulation sera de 10/1 soit 200 ml de solution pour 20 g de substrat. La solution utilisée est préparée à une concentration proche de la limite de solubilité du chlortoluron dans l'eau (74 mg.l$^{-1}$) soit 60 mg.l$^{-1}$. Pour préparer cette solution, 60 mg de chlortoluron sont ajoutés à 1 litre d'eau UHQ. Le mélange est ensuite agité pendant 12 heures avec un agitateur orbital à 200 rpm. La concentration réelle de la solution est ensuite déterminée en HPLC. 200 ml de cette solution sont alors ajoutés dans un batch contenant 20 g de terre provenant du site des essais puis mis sous agitation orbitale à 200 rpm. Des prélèvements de solution sont faits à intervalles réguliers pendant 24 heures avant d'être analysés par HPLC pour quantifier le chlortoluron.

Le chlortoluron présente une faible adsorption sur la terre testée, de l'ordre de 14 % après 24 heures. Cette adsorption étant relativement faible, elle ne devrait pas interférer dans les résultats des essais réalisés avec cette molécule.

4.1.3 - Essais réalisés en désherbage de blé tendre d'hiver

Les parcelles d'essai traitées au chlortoluron formulé de différentes façons ont été emblavées en blé tendre d'hiver. L'efficacité du traitement est suivie par rapport au nombre d'individus de pâturin présents sur les parcelles. Une comparaison a été effectuée avec des parcelles témoins n'ayant pas reçu de matière active.

- La zéolithe utilisée est la HFAU40 combinée au chlortoluron. Trois charges ont été réalisées et trois doses par charge ont été testées sur des parcelles de 2 m$^2$. Trois répétitions ont été effectuées à chaque fois.
- Les quantités nécessaires des combinaisons zéolithe HFAU40-chlortoluron ont été préparées en extrapolant la méthode mise au point pour de faibles quantités. Un réacteur de 60 litres a été utilisé. Les zéolithes HFAU40 non tamisées ont été chargées à l'équilibre. La concentration des solutions de chlortoluron est de 60 mg.l$^{-1}$, la dissolution du produit étant facilitée par addition de 2 % d'éthanol. Les charges réelles sont déterminées par suivi en HPLC de l'adsorption puis par analyse élémentaire de la combinaison obtenue. Les conditions expérimentales sont décrites dans le (tableau 21). Les traitements ont été préparés individuellement pour chaque parcelle (tableau 22).

Tableau 21 : préparation et caractéristiques des différentes zéolithes utilisées lors des essais. La zéolithe HFAU40 non tamisée est chargée à l'équilibre. Les solutions aqueuses de chlortoluron à 60 mg.l$^{-1}$ sont réalisées en ajoutant 2 % d'éthanol pour faciliter la solubilisation. Les charges réelles sont obtenues par suivi de l'adsorption en HPLC puis par analyse élémentaire du produit fini (résultats identiques)

| Zéolithe | Chargement attendu (mg de chlortoluron par g de zéolithe) | Volume de solution à 60 mg.l$^{-1}$ de chlortoluron | Masse de zéolithe (g) | Charge réelle (mg de chlortoluron par g de zéolithe) |
|---|---|---|---|---|
| HFAU40C105 | 105 | 50 | 25 | 108 |
| HFAU40C050 | 50 | 40 | 40 | 56 |
| HFAU40C025 | 25 | 45 | 90 | 29 |

Tableau 22 : quantités de combinaisons zéolithe-chlortoluron préparées pour les parcelles traitées par épandage d'un mélange zéolithe sable. La zéolithe utilisée est HFAU40 non tamisée à trois charges différentes : 108, 56 et 29 mg.g$^{-1}$. Trois dosages différents sont testés : dose homologuée (DH, 1 800 g.ha$^{-1}$ soit 360 mg de chlortoluron par parcelle de 2 m$^2$), demi-dose homologuée (DH/2, 900 g.ha$^{-1}$ soit 180 mg de chlortoluron par parcelle de 2 m$^2$) et quart de dose homologuée (DH/4, 450 g.ha$^{-1}$ soit 90 mg de chlortoluron par parcelle de 2 m$^2$)

| Charge | Dose | DH | DH/2 | DH/4 |
|---|---|---|---|---|
| HFAU40C108 | | 3,33 g | 1,67 g | 0,83 g |
| HFAU40C056 | | 6,48 g | 3,24 g | 1,62 g |
| HFAU40C029 | | 12,42 g | 6,21 g | 3,10 g |

Les traitements ont été réalisés en mélangeant les zéolithes à du sable de Fontainebleau afin de faciliter l'épandage. Pour comparer deux modes d'application, des traitements ont également été pulvérisés en suspension dans de l'Agral 90 (0,5 ml.l$^{-1}$) à la dose homologuée DH (1800 g.ha$^{-1}$) et à la demi-dose homologuée DH/2 (900 g.ha$^{-1}$), ceci avec la zéolithe HFAU40 chargée à 108 mg.g$^{-1}$.

• Un témoin positif a été réalisé en appliquant pour les différentes doses (DH, DH/2 et DH/4) du chlortoluron formulé commercialement (Klortosan®). L'application s'est faite au pulvérisateur à raison de 200 l par hectare et les trois répétitions ont été traitées en même temps. La préparation est donc la suivante :

- Dose homologuée (DH), 1800 g.ha$^{-1}$ soit 360 mg de chlortoluron par parcelle de 2 m$^2$. On dilue 2,7 ml de Klortosan® (500 g.l$^{-1}$ de chlortoluron) dans 150 ml d'eau.
- Demi-dose homologuée (DH/2), 900 g.ha$^{-1}$ soit 180 mg de chlortoluron par parcelle de 2 m$^2$. 1,35 ml de Klortosan® sont dilués dans 150 ml d'eau.
- Quart de dose homologuée (DH/4), 450 g.ha$^{-1}$ soit 90 mg de chlortoluron par parcelle de 2 m$^2$. 0,675 ml de Klortosan® sont dilués dans 150 ml d'eau.

• La quantité de zéolithe à épandre par parcelle étant très faible, les combinaisons zéolithe-chlortoluron ont été mélangées à du sable de Fontainebleau à raison de 12 g de sable par parcelle. L'épandage par pulvérisation nécessite plus de préparation que l'épandage d'une poudre : (i) la zéolithe ne doit pas obstruer les buses du pulvérisateur et elle doit donc être tamisée pour avoir un diamètre inférieur à 0,2 mm (ii) la zéolithe utilisée en présence d'eau va désorber de la matière active dans la cuve du pulvérisateur. Pour éviter cela, la zéolithe est conservée en suspension dans une solution de faible concentration en chlortoluron (6,5 mg.l$^{-1}$), afin de recréer les conditions de l'équilibre d'adsorption. Afin de maintenir les zéolithes en suspension, on ajoute de l'Agral 90 à la solution. La préparation obtenue sera alors stable et de plus, une petite quantité de matière active sera immédiatement disponible pour la plante. Le tableau 23 présente les caractéristiques des formulations en suspension.

Tableau 23 : caractéristiques des formulations en suspension pour épandage par pulvérisation. La zéolithe utilisée est HFAU40 tamisée à 0,2 mm et chargée à 108 mg de chlortoluron par g. L'application se fait à dose homologuée (DH, 1 800 g.ha$^{-1}$ soit 360 mg de chlortoluron par parcelle de 2 m$^2$ ou à demi-dose homologuée (DH/2, 900 g.ha$^{-1}$ soit 180 mg de chlortoluron par parcelle de 2 m$^2$). Avant pulvérisation, la zéolithe est ensuite placée dans une solution de chlortoluron à 6,5 mg.l$^{-1}$ contenant 0,05 % d'Agral 90

| Dose | Préparation | Masse de HFAU40C108 | Volume de solution (ml) | Quantité d'Agral 90 (ml) |
|---|---|---|---|---|
| DH | | 3,6 | 250 | 0,125 |
| DH/2 | | 1,8 | 250 | 0,125 |

• L'efficacité des traitements a été évaluée en comptant le nombre de pâturins présents dans les parcelles ayant reçu les différents traitements et en comparant avec les parcelles témoins n'ayant pas reçu de matière active. Le comptage a été effectué 5 mois et demi après les traitements, après fauchage du blé pour faciliter le dénombrement des adventices.

Le traitement à base de la formulation commerciale Klortosan® est significativement efficace quelle que soit la dose appliquée à l'hectare : aussi bien à la dose homologuée DH qu'à DH/2 ou à DH/4, le nombre de pâturins ayant poussé sur les parcelles traitées est significativement (p = 0,001) moins important au m$^2$ que celui observé sur les parcelles témoin non traitées.

Le traitement réalisé avec la combinaison HFAU40 chargée à 108 mg de chlortoluron par g de zéolithe est significativement efficace à dose homologuée DH et à DH/2. Une observation qui mérite d'être soulignée est le comportement identique de cette charge appliquée par poudrage ou par pulvérisation. Ceci peut être intéressant, les applications par pulvérisation étant un mode en général plus communément utilisé par les agriculteurs. La seule chose à éviter dans ce cas est la désorption de trop de matière active si la combinaison zéolithe-composé phytopharmaceutique stagne trop longtemps dans la cuve du pulvérisateur. Nous avons vu que pour pallier ce problème, il suffisait d'ajouter une faible quantité de matière active libre de façon à recréer les conditions d'équilibre observées lors de la phase d'adsorption. Ceci présente également l'avantage de mettre immédiatement à disposition des plantes une partie de matière active biodisponible.

La zéolithe chargée à 56 mg de chlortoluron par g de zéolithe a une efficacité significative pour les doses DH/2 et DH/4. L'absence de significativité à la dose homologuée est très certainement due au faible nombre de plantes adventices ayant poussé.

La zéolithe chargée à 29 mg de chlortoluron par g de zéolithe montre une efficacité significative seulement pour la dose homologuée.

Ces résultats permettent de tirer des enseignements intéressants, notamment le fait que nos combinaisons peuvent avoir une efficacité biologique du même ordre que le composé commercial. Comme nous l'avons déjà mentionné, l'application par pulvérisation n'entraîne pas de différence d'efficacité biologique par rapport à l'épandage sous forme de poudre. Cependant, les conditions climatiques de la période pendant laquelle les essais ont été réalisés n'étaient pas favorables à une forte croissance des adventices et il est donc difficile d'en tirer d'autres conclusions. Un nouveau test de plus grande envergure a donc été mis en place l'année suivante.

4.2 - Deuxième essai d'utilisation des combinaisons zéolithes HFAU40-chlortoluron en désherbage du blé d'hiver

Une seconde campagne d'essais a été menée pour les zéolithes combinées au chlortoluron au cours de la saison 2009-2010. Ces tests ont également été réalisés sur la commune de St Sauvant (Vienne). La présente étude a été faite toujours en désherbage de blé tendre d'hiver mais avec un ensemencement en ray-grass italien sensible au chlortoluron. Les parcelles unitaires sont plus grandes avec une longueur de 12 m sur une largeur de 3 m soit une surface de 36 m$^2$. Vu les résultats obtenus précédemment, nous avons choisi une application des produits par pulvérisation.

Compte tenu de la taille de ces parcelles, le procédé utilisé jusqu'ici pour adsorber les composés phytopharmaceutiques sur nos zéolithes n'était plus envisageable car nécessitant de bien trop grands volumes de solution. Nous avons donc réalisé une nouvelle méthode pour préparer des quantités pilotes de l'ordre du kilogramme, toujours en phase aqueuse mais avec des volumes de solution d'adsorbat beaucoup plus faibles. Ce volume est choisi judicieusement de façon à pulvériser directement la préparation obtenue sans dilution supplémentaire. Les combinaisons zéolithe HFAU40 et chlortoluron utilisées au cours de ces essais ont donc été préparées (tableau 24) selon le procédé déjà décrit au 1.2. Pour cette campagne d'essais, nous avons choisi de travailler à dose homologuée (DH = 1800 g.ha$^{-1}$) et à demi-dose homologuée (DH/2 = 900 g.ha$^{-1}$). La zéolithe HFAU40 a été utilisée non tamisée. Pour l'utilisation à dose homologuée, trois charges ont été préparées : 60, 30 et 21,5 mg de chlortoluron par g de zéolithe. Pour la demi-dose homologuée, quatre charges ont été préparées : 105, 60, 30 et 10 mg de chlortoluron par g de zéolithe. Nous avons donc 7 modalités différentes, chacune ayant été répétée trois fois. Le volume appliqué par parcelle (et donc pour la préparation des combinaisons) est basé sur 200 l. Ha$^{-1}$, soit 0,72 l par parcelle de 36 m$^2$, ce qui fait 2,16 l par modalité (3 x 36 m$^2$). En pratique, les préparations ont été faites sur 2,3 l.

La totalité de la quantité nécessaire de chlortoluron et de celle de zéolithe HFAU40 est ajoutée simultanément dans le volume d'eau déminéralisée adéquat soit 2,3 l. L'ensemble est maintenu en suspension par agitation orbitale à 200 rpm. La concentration en chlortoluron dans la solution est suivie par HPLC. L'adsorption est terminée lorsque la concentration en chlortoluron reste stable sur plusieurs mesures, l'état d'équilibre étant alors atteint. À l'exception de la zéolithe prévue à 10 mg.g$^{-1}$ pour DH dont la préparation a dû être modifiée pour des raisons de rapport trop élevé entre la masse de zéolithe et le volume d'eau, il est remarquable de constater que les charges finales obtenues sont très proches de ce qui était initialement prévu. Ceci valide le mode de préparation sur une échelle pilote de l'ordre du kilogramme de produit.

Tableau 24 : conditions opératoires pour la préparation des combinaisons zéolithe HFAU40-chlortoluron nécessaires pour chaque modalité de traitement (3 parcelles de 36 m$^2$). La zéolithe est HFAU40 commerciale, non tamisée. Les quantités de combinaisons zéolithe-chlortoluron nécessaires à deux doses testées (dose homologuée DH, 1 800 g.ha$^{-1}$ et demi-dose homologuée DH/2, 900 g.ha$^{-1}$) ont été préparées avec 3 charges différentes pour DH (10, 30 et 60 mg.g$^{-1}$) et 4 pour DH/2 (10, 30, 60 et 105 mg.g$^{-1}$). La zéolithe prévue pour être chargée à 10 mg.g$^{-1}$ pour la dose homologuée n'a pas pu être réalisée dans les conditions initialement prévues (20,7 g de chlortoluron, 2 070 g de zéolithe et 2,3 l d'eau désionisée) car la quantité de zéolithe nécessaire était trop importante pour le volume d'eau à utiliser. Nous avons augmenté le volume d'eau à 3,95 l et la quantité de chlortoluron à 35,55 g afin de réaliser la zéolithe la plus faiblement chargée possible

|  | Charge prévue (mg.g$^{-1}$) | Quantité de chlortoluron (g) | Quantité de HFAU40 (g) | Volume d'eau désionisée (l) | Charge réelle mesurée en HPLC (mg.g$^{-1}$) | Différence entre charge prévue et réelle (%) |
|---|---|---|---|---|---|---|
| DH 1800 g.Ha$^{-1}$ | 60 | 20,7 | 345 | 2,3 | 59,9 | -0,17 |
| | 30 | 20,7 | 690 | 2,3 | 30 | 0 |
| | 10 puis 21,45 | 35,55 | 1657 | 3,95 | 21,45 | + 114,5 puis 0 |
| DH/2900 g.Ha$^{-1}$ | 105 | 10,35 | 98,6 | 2,3 | 104,7 | - 0,29 |
| | 60 | 10,35 | 172,6 | 2,3 | 59,8 | - 0,33 |
| | 30 | 10,35 | 345 | 2,3 | 30 | 0 |
| | 10 | 10,35 | 1035 | 2,3 | 10 | 0 |

Après avoir remis en suspension les zéolithes et avoir ajouté un agent mouillant (Agral 90 à 0,05 %), les traitements sont épandus avec un pulvérisateur manuel. Chaque répétition de chaque modalité a été placée entre un témoin négatif non traité et un témoin positif traité avec la formulation commerciale Klortosan® utilisée à la même dose (tableau 25). Nous avons donc 9 modalités différentes. 720 ml de formulation sont appliqués sur chaque parcelle à l'exception des parcelles traitées à DH avec HFAU40C021 qui ont reçu 1,2 l de formulation.

Cette dernière dose représente un surdosage (DH x 1,8) et elle ne sera pas prise en compte pour l'exploitation des résultats.

Tableau 25 : préparation du traitement pour les différentes modalités. Chaque modalité correspond à 3 parcelles de 36 m$^2$ chacune. Le traitement a été réalisé avec un pulvérisateur

| Modalité | Type de traitement | Concentration en chlortoluron dans la formulation (g.l$^{-1}$) | Volume de solution épandue par parcelle (ml) | Quantité de chlortoluron épandue par parcelle (g) | Dose relative à la dose homologuée DH |
|---|---|---|---|---|---|
| 1 | Klortosan® | 9 | 720 | 6,48 | DH |
| 2 | HFAU40C021 | 9,71 | 1200 | 11,66 | 1,8x DH |
| 3 | HFAU40C030 | 9 | 720 | 6,48 | DH |
| 4 | HFAU40C060 | 9 | 720 | 6,48 | DH |

(suite)

| Modalité | Type de traitement | Concentration en chlortoluron dans la formulation (g.l$^{-1}$) | Volume de solution épandue par parcelle (ml) | Quantité de chlortoluron épandue par parcelle (g) | Dose relative à la dose homologuée DH |
|---|---|---|---|---|---|
| 5 | Klortosan® | 4,5 | 720 | 3,24 | DH/2 |
| 6 | HFAU40C010 | 4,5 | 720 | 3,24 | DH/2 |
| 7 | HFAU40C030 | 4,5 | 720 | 3,24 | DH/2 |
| 8 | HFAU40C060 | 4,5 | 720 | 3,24 | DH/2 |
| 9 | HFAU40C105 | 4,5 | 720 | 3,24 | DH/2 |

Plusieurs notations s'effectuent après le traitement afin d'évaluer l'efficacité herbicide du traitement. Celle-ci est appréciée par comparaison avec le produit commercial Klortosan® utilisé en pulvérisation aux mêmes doses de matière active à l'hectare et avec des bandes témoins n'ayant reçu aucun traitement. Pour cela, nous utilisons un indice de mortalité du ray-grass allant de 0 à 9 : 0 toutes les plantes sont présentes (témoin négatif non traité), 9 toutes les plantes sont tuées par l'herbicide. Les comptages sont réalisés après 14, 18, 21, 27, 57 et 70 jours après le traitement. Rappelons que la modalité 2 n'a pas été interprétée car elle est surdosée par rapport aux autres.

À dose homologuée, l'efficacité herbicide est totale sur les 3 parcelles traitées avec la formulation commerciale au 27e jour après le traitement. Comme attendu et à l'instar de ce qui avait déjà été observé auparavant, le chlortoluron formulé avec des zéolithes est plus long à manifester une activité biologique. La zéolithe chargée à 30 mg.g$^{-1}$ semble plus homogène que celle chargée à 60 mg.g$^{-1}$ : l'indice de mortalité est de 8 après 57 jours pour les trois parcelles ayant reçu la première mais il est échelonné entre 4 et 9 pour les trois parcelles ayant reçu la seconde.

À demi-dose homologuée de formulation commerciale, l'effet herbicide est plus long à se manifester et avec davantage d'hétérogénéité entre les parcelles qu'à la dose homologuée. Au jour 70, l'indice de mortalité du ray-grass est échelonné de 7 à 9. Quant aux zéolithes, l'apparition de l'effet herbicide est aussi décalée par rapport à la dose homologuée mais de façon moins marquante que la formulation commerciale. L'homogénéité entre les parcelles est bonne, voire meilleure que celle de la formulation commerciale. À ce stade de la notation, l'influence de la charge semble peu marquée. En effet, hormis la zéolithe la moins chargée (10 mg.g$^{-1}$) qui semble un peu moins efficace et plus hétérogène quant à son activité sur les différentes parcelles (indice de mortalité de 3 à 6 après 70 jours), les 3 autres combinaisons ont des activités herbicides très semblables (indice de mortalité après 70 jours échelonné de 5 à 7 pour les zéolithes chargées à 30 et 60 mg.g$^{-1}$ et de 6 à 7 pour celle chargée à 105 mg.g$^{-1}$). Cet effet biologique après 70 jours est en léger retrait par rapport à la formulation commerciale mais si on analyse la progression des résultats entre 27 et 70 jours après le traitement, il apparaît que l'activité de la formulation commerciale ne progresse pratiquement plus alors que l'effet des combinaisons chlortoluron-zéolithes continue de progresser régulièrement. D'un point de vue global et à ce stade de l'expérimentation, l'effet retard attendu se manifeste bien avec une bonne homogénéité entre les différentes répétitions. Quoique légèrement inférieur à la formulation commerciale, l'effet biologique est tout de même très marqué et à demi-dose homologuée, il progresse de façon quasi linéaire au moins jusqu'au jour 70 qui est la dernière donnée de l'essai.

Exemple 5 - Étude comparative simultanée du lessivage et de l'adsorption par la plante entre une composition selon l'invention et une formulation commerciale

Pour étudier en même temps le lessivage et l'absorption de la matière active par la plante, nous avons mis au point un test non destructif pour la plante et qui permet un suivi sur une longue durée (45 jours pour l'étude réalisée). Pour la quantification de la matière active absorbée par la plante, nous avons utilisé le test de guttation chez la tomate. Les tomates possèdent au niveau de leurs pointes foliaires des stomates d'un type particulier, les hydatodes. Dans certaines conditions de température et d'hygrométrie, la sève xylémienne (sève brute) va perler par les hydatodes. Si une molécule phytopharmaceutique a été absorbée par les racines, elle va être retrouvée notamment dans ce liquide de guttation et elle pourra être quantifiée par CLHP. Pour faire un suivi sur une longue durée (plusieurs semaines), nous avons utilisé une tomate à croissance naine, la variété « Red Robin ». Ce type de test exclut évidemment les molécules herbicides, aussi nous sommes nous intéressés lors de cette étude à un fongicide, le penconazole.

Les tomates (*Lycopersicon esculentum* var. Red Robin) sont repiquées au stade 1re feuille naissante en pot individuel sur vermiculite. Chaque pot est posé sur un récipient en verre (type bêcher) pour recueillir les eaux de lessivage. Les plantes sont arrosées chaque jour avec un liquide nutritif adapté ($KNO_3$ 3 mmol.l$^{-1}$, $KH_2PO_4$ 0,5 mmol.l$^{-1}$, $Ca(NO_3)_2$

0,5 mmol.l$^{-1}$, MgSO$_4$, 7H$_2$O 0,5 mmol.l$^{-1}$, (NH$_4$)$_6$MO$_7$O$_{24}$ 1 $\mu$mol.l$^{-1}$ en Mo, H$_3$BO$_3$ 30 $\mu$mol.l$^{-1}$, MnSO$_4$,H$_2$O 5 $\mu$mol.l$^{-1}$, NH$_4$(NO$_3$) 0,12 $\mu$mol.l$^{-1}$, ZnSO$_4$, 7H$_2$O 1 $\mu$mol.l$^{-1}$, CuSO$_4$, 5H$_2$O 1 $\mu$mol.l$^{-1}$, Sequestrène à 6 % Fe 100 $\mu$mol.l$^{-1}$). La culture se fait en atmosphère contrôlée à une température de 25 $\pm$ 1 °C en période diurne (14 heures) et avec une hygrométrie de 60 $\pm$ 5 %. À la fin de la photopériode et à compter du stade 4 feuilles (début du test), les tomates sont arrosées avec 80 ml de solution nutritive par plante puis placées sous une cloche de façon à obtenir une hygrométrie proche de la saturation durant la période nocturne (t = 19 $\pm$ 1 °C). À la fin de cette dernière, la cloche est retirée puis les gouttelettes de liquide de guttation sont collectées plante par plante à l'aide d'une micropipette automatique. Le liquide de lessivage qui s'est écoulé durant la nuit est également collecté individuellement.

Le produit phytopharmaceutique est appliqué de façon homogène en surface des pots au stade 4 feuilles des tomates. Dans le cas du penconazole, nous avons appliqué le double de la dose homologuée soit 71 $\mu$g de matière active par plante. Cette dose est nécessaire pour avoir une quantification correcte de la molécule dans la sève xylémienne et nous l'avons déterminée par des manipulations préalables. Deux lots de six plantes ont été constitués : le premier a reçu un traitement à base de la formulation commerciale du penconazole (Topaze®, 100 g.l$^{-1}$) tandis que le second a reçu un traitement à base de penconazole adsorbé sur zéolithe HFAU40 (57 mg.g$^{-1}$) (tableau 26). Les collectes débutent dès le lendemain du traitement et sont faites entre 3 et 5 jours par semaine sur une durée de 45 jours. Pour que la guttation ne s'interrompe pas avec le vieillissement de la plante, il est important de supprimer les fleurs dès qu'elles se forment.

Tableau 26 : préparation des traitements pour le test d'évaluation de la biodisponibilité. La zéolithe HFAU40 a été tamisée entre 0,08 et 0,2 mm. Les pots utilisés sont en verre et ont un diamètre de 9,5 cm soit une surface de 71 cm$^2$. Une première dilution est faite dans le kaolin suivie d'une seconde dans le sable de Fontainebleau

| Formulation | Concentration en penconazole de la formulation | Quantité de penconazole appliquée par pot ($\mu$g) | Quantité de formulation par g de kaolin | Quantité de mélange par pot (mg) | Quantité de sable par pot (g) |
|---|---|---|---|---|---|
| HFAU40P057 | 57 mg.g$^{-1}$ | 71 | 1,5 mg | 83 | 9 |
| Topaze® | 100 g.l$^{-1}$ | 71 | 1 $\mu$l | 71 | 9 |

Le penconazole a ensuite été dosé dans le liquide de guttation par CLHP couplée à un spectromètre de masse et dans les eaux de lessivage par CLHP avec une détection UV classique. De ces analyses, deux enseignements peuvent être tirés : d'une part, la quantité de penconazole absorbée par la plante et retrouvée dans la sève brute est supérieure dans le lot traité avec la zéolithe (1,4 fois plus en moyenne sur la durée de l'expérience) et d'autre part, il y a moins de penconazole dans les eaux de lessivage lorsque celui-ci a été adsorbé sur la zéolithe HFAU40 (près de 2 fois moins en quantités cumulées).

Cette expérience montre que bien qu'il n'y ait plus de produit dans la phase liquide mobile du sol après 20 jours, il est encore présent dans la phase liquide immobile et continue à être absorbé par la plante. Cette absorption est plus importante si le penconazole est adsorbé sur la zéolithe HFAU40 en comparaison de la formulation commerciale. Le bénéfice environnemental global apparaît donc clairement en faveur des compositions selon l'invention lorsqu'elles sont comparées en conditions identiques à la formulation commerciale. On dispose ainsi d'une quantité de matière active optimale amenée au voisinage des racines progressivement, afin d'améliorer la biodisponibilité par rapport aux formulations commerciales souvent lessivées trop rapidement et donc indisponibles.

Exemple 6 - Étude de la stabilité dans le temps d'une composition selon l'invention

Les analyses de matière active extraite à partir de la zéolithe HFAU40 (faiblement) chargée à 7 mg de chlortoluron par g de zéolithe et stockée dans diverses conditions à température ambiante sur une période de 7 mois ont donné les résultats suivants :

- Stockage air et lumière : on retrouve après extraction 6,37 mg de chlortoluron par g de zéolithe
- Stockage air et obscurité : on retrouve après extraction 7,12 mg de chlortoluron par g de zéolithe
- Stockage flacon fermé et obscurité : on retrouve après extraction 6,59 mg de chlortoluron par g de zéolithe.

Cette zéolithe était faiblement chargée en matière active et donc potentiellement plus sensible à une éventuelle dégradation de la matière active. Nous avons observé qu'il n'en est rien et que globalement on retrouve la quantité initiale.

On peut donc considérer que dans ces différentes conditions et sur la période de 7 mois considérée, il n'y a pas eu de variation significative de la teneur en matière active.

Exemple 7 - Étude de la reproductibilité de compositions de l'état de la technique comprenant une matière active phytosanitaire et une zéolithe (exemple comparatif)

Cet exemple démontre l'impossibilité de reproduire les résultats de plusieurs publications. Le produit envisagé (insecticide Supercyperméthrine [SCM] inclus dans une zéolithe naturelle de type clinoptilolite [CT]) dans les références [1-3] n'a pas pu être obtenu pour les raisons suivantes.

Il a été montré récemment que le phénol, molécule beaucoup moins volumineuse que la SCM, s'adsorbait à hauteur d'environ 0,02 mg par g de CT [4]. Or dans le cas de la SCM, les auteurs annoncent entre 140 et 160 mg par g de clinoptilolite traitée au cuivre [CuCT] [2]. Notons que le traitement au cuivre ne modifie que très faiblement la capacité de chargement (0,7 mg en plus pour un total de 140 mg de SCM, référence [3] figure 3)

Dans la référence [1], l'analyse en microscopie électronique des surfaces montre qu'il y a un changement d'aspect lorsque la SCM est adsorbée dans la CT. La SCM retenue dans la CT l'est donc dans la fraction argile de celle-ci. La CT considérée est constituée pour 57 % d'une structure zéolithique et pour 43 % d'une argile [3]. En cas d'adsorption dans les canaux de la zéolithe, l'aspect de surface devrait être rigoureusement le même. Ce qui n'est pas le cas.

A ce sujet, les auteurs comparent en terme d'adsorption la CuCT à la montmorillonite ayant subi le même type d'activation, or la montmorillonite est une argile (référence [2] page 478).

Les expériences de désorption conduisent forcément à une impasse compte tenu de la quasi insolubilité dans l'eau de la SCM (0,01 à 0,2 mg.l$^{-1}$), contrairement à ce qui est annoncé dans la référence [3] page 477. Par ailleurs, les expériences de désorption aqueuse réalisées dans la référence [2] sont en réalité faites dans un milieu contenant 2 % d'acétone. Même dans ces conditions, la désorption n'atteint au maximum que 1,43 % du produit présent initialement (référence [2] page 482). Les auteurs annoncent même avoir adsorbé des cyclodextrines [2], objectif inaccessible *de facto* compte tenu de la taille de ces composés qui sont eux-mêmes des molécules cages.

Enfin, une étude de modélisation moléculaire montre que la taille calculée de la molécule de SCM en tenant compte des rayons de van der Waals (section moléculaire minimale de 9,7 x 8,8 A$^2$) est totalement incompatible avec une entrée dans les pores de la CT dont la section est de 7,6 x 3,5 A$^2$. Si à l'aide d'un logiciel adapté, on inclut graphiquement une molécule de SCM dans une cage de CT, on constate que les atomes se chevauchent rendant ainsi son inclusion impossible au sein de la CT. Publications dont les expérimentations ont été évaluées :

1 Sopkova, A. Inclusion-compounds - possibility of their combination and use in différent branches of chemistry. Journal of Inclusion Phenomena and Molecular Recognition in Chemistry 14, 5-17 (1992)

2 Sopkova, A. & Janokova, E. An insecticide stabilized by natural zeolite. Journal of Thermal Analysis and Calorimetry 53, 477-485 (1998)

3 Sopkova, A. & Mezes, P. About the inclusion of an insecticide in zeolitic materials. Journal of Thermal Analysis 46, 471-478 (1996)

4 Sprynskyy, M., Ligor, T., Lebedynets, M. & Buszewski, B. Kinetic and equilibrium studies of phenol adsorption by natural and modified forms of the clinoptilolite. Journal of Hazardous Materials 169, 847-854, doi:10.1016/j.jhazmat.2009.04.019 (2009)

En conclusion, il apparaît qu'aucun des mélanges de zéolithe et de produit phytosanitaire n'a conduit à une composition pour laquelle la matière active est incluse au sein de la structure de la zéolithe.

## Revendications

1. Méthode de traitement phytosanitaire de plantes au moyen d'une composition phytosanitaire comprenant

   a) une zéolithe hydrophobe dont le rapport Si/Al est compris entre 5 et 2000 ;
   b) une matière active pesticide, choisie parmi le pyrimicarbe, le penconazole, l'epoxiconazole, le chlortoluron et l'acide 5-chlorosalicylique, adsorbée et incluse au sein de la zéolithe,

   ladite composition étant mise en oeuvre par application racinaire lors du traitement des plantes.

2. Méthode selon les revendications 1 dans laquelle la composition comprend une zéolithe dont le rapport Si/Al est compris entre 5 et 100.

3. Méthode selon les revendications 1 à 2 dans laquelle la composition comprend une zéolithe à ouverture de pores à 12 atomes ou une zéolithe à ouverture de pores à 10 ou 8 atomes.

**4.** Méthode selon les revendications 1 à 3 dans laquelle la composition comprend une zéolithe choisie parmi AFI (AIPO$_4$-5), AFR (SAPO-40), AFS (MAPSO-46), AFY (CoAPO-50), ATO (AIPO$_4$.31), ATS (MAPO-36), BEA (Beta), BOG (Boggsite), BPH (Beryllophosphate-H), CAN (Cancrinite), CON (CIT-1), DFO (DAF-1), EMT (EMC-2), FAU (Faujasite), GME (Gmelinite°LTL (Linde type L), MAZ (Mazzite), MEI (ZSM-18), MOR (Mordenite), MTW (ZSM-12), OFF (Offretite), RON (Roggianite), VET (VPI-8), AEL (AIPO$_4$-11), AFO (AIPO$_4$-41), AHT (AIPO$_4$-H2), DAC (Dachiardite), EPI (Epistilbite), EUO (EU-1), FER (Ferrierite), HEU (Heulandite), LAU (Laumontite), MEL (ZSM-11), MFI (ZSM-5), MFS (ZSM-57), MTT (ZSM-23), NES (NU-87), -PAR (Partheite), STI (Stilbite), TON (Theta-1), WEI (Weinebeneite), - WEN (Wenkite), ABW (Li-A (Barrer and White)), AEI (AIPO$_4$-18), AFT (AIPO$_4$-52), AFX (SAPO-56), APC (AIPO$_4$-C), APD (AIPO$_4$-D), ATN (MAPO-39), ATT (AIPO$_4$-12-TAMU), ATV (AIPO$_4$-25), AWW (AIPO$_4$-22), BIK (Bikitaite), BRE (Brewsterite), CAS (Césium Aluminosilicate (Araki)), CHA (Chabazite), DDR (Deca-dodecasil 3R), EAB (TMA-E), EDI (Edingtonite), ERI (Erionite), GIS (Gismondine), GOO (Goosecreekite), JBW (NaJ (Barrer and White)), KFI (ZK-5), LEV (Levyne), LTA (Linde type A), MER (Merlinoite), MON (Montesommaite), NAT (Natrolite), PAU (Paulingite), PI-H (Phillilpsite), RHO (Rho), RTE (RUB-3), RTH (RUB-13), THO (Thomsonite), VNI (VP1-9), YUG (Yugawaralite), ZON (ZAPO-M1).

**5.** Méthode selon les revendications 1 à 4 dans laquelle la composition comprend une zéolithe comprenant des pores dont le diamètre est de 4 à 8 Å, et des cages ou volumes de cage d'un volume de cage de 13 Å.

**6.** Méthode selon les revendications 1 à 5 dans laquelle la composition comprend une zéolithe comprenant des pores dont le diamètre est de 5 à 7,5 Å, et des cages ou volumes de cage d'un volume de cage de 13 Å.

**7.** Méthode selon les revendications 1 à 6 dans laquelle la composition comprend une zéolithe HY commerciale (HFAU40) avec Si/Al = 32 et VM = 0,245 cm$^3$/g.

**8.** Méthode selon les revendications 1 à 7 dans laquelle la composition comprend une zéolithe de type faujasite.

**9.** Méthode selon les revendications 1 à 8 dans laquelle la composition comprend une zéolithe ayant une granulométrie comprise entre 0,01 et 0,8 mm.

**10.** Méthode selon les revendications 1 à 9 dans laquelle la composition comprend une zéolithe ayant une granulométrie comprise entre 0,1 et 0,5 mm.

**11.** Méthode selon les revendications 1 à 10 dans laquelle la composition comprend 80 à 99,9 % de zéolithe.

**Patentansprüche**

**1.** Verfahren zur phytosanitären Behandlung von Pflanzen mittels einer phytosanitären Zusammensetzung, umfassend

    a) einen hydrophoben Zeolith, dessen Verhältnis Si/Al zwischen 5 und 2000 liegt;
    b) einen Pestizidwirkstoff, ausgewählt aus Pyrimicarb, Penconazol, Epoxiconazol, Chlortoluron und 5-Chlorsalicylsäure, der in dem Zeolith adsorbiert und einbezogen ist,

wobei die Zusammensetzung durch eine Wurzelanwendung bei der Behandlung umgesetzt wird.

**2.** Verfahren nach Anspruch 1, bei dem die Zusammensetzung einen Zeolithen enthält, dessen Verhältnis Si/Al zwischen 5 und 100 liegt.

**3.** Verfahren nach Anspruch 1 bis 2, bei dem die Zusammensetzung einen Zeolithen mit Porenöffnung 12 Atome oder einen Zeolithen mit Porenöffnung 10 oder 8 Atome aufweist.

**4.** Verfahren nach den Ansprüchen 1 bis 3, bei dem die Zusammensetzung einen Zeolithen, ausgewählt aus AFI (AIPO$_4$-5), AFR (SAPO-40), AFS (MAPSO-46), AFY (CoAPO-50), ATO (AIPO$_4$.31), ATS (MAPO-36), BEA (Beta), BOG (Boggsit), BPH (Beryllophosphat-H), CAN (Cancrinit), CON (CIT-1), DFO (DAF-1), EMT (EMC-2), FAU (Faujasit), GME (Gmelinite°LTL (Linde Typ L), MAZ (Mazzit), MEI (ZSM-18), MOR (Mordenit), MTW (ZSM-12), OFF (Offretit), RON (Roggianit), VET (VPI-8), AEL (AI-PO$_4$-11), AFO (AIPO$_4$-41), AHT (AIPO$_4$-H2), DAC (Dachiardit), EPI (Epistilbit), EUO (EU-1), FER (Ferrierit), HEU (Heulandit), LAU (Laumontit), MEL (ZSM-11), MFI (ZSM-5), MFS (ZSM-57), MTT (ZSM-23), NES (NU-87), -PAR (Partheit), STI (Stilbit), TON (Theta-1), WEI (Weinebeneit), - WEN (Wenkit), ABW (Li-A (Barrer and White)), AEI (AIPO$_4$-18), AFT (Al-PO$_4$-52), AFX (SAPO-56), APC (AIPO$_4$-C), APO (AIPO$_4$-D), ATN (MAPO-39), ATT (AIPO$_4$-12-TAMU), ATV (AIPO$_4$-25), AWW (AIPO$_4$-22), BIK (Bikitait), BRE (Brewsterit), CAS (Cesium Aluminosilicat (Araki)), CHA (Chabazit), DDR (Decadodecasil 3R), EAB (TMA-E), EDI (Edingtonit), ERI (Erionit), GIS (Gismondin), GOO (Goosecreekit), JBW (NaJ (Barrer and White)), KFI (ZK-5), LEV (Levyn), LTA (Linde Typ A), MER (Merlinoit), MON (Montesommait), NAT (Natrolit), PAU (Paulingit), PI-H (Phillilpsit), RHO (Rho), RTE (RUB-3), RTH (RUB-13), THO (Thomsonit), VNI (VP1-9), YUG (Yugawaralit), ZON (ZAPO-M1).

**5.** Verfahren nach den Ansprüchen 1 bis 4, bei dem die Zusammensetzung einen Zeolith enthält, der Poren, deren Durchmesser zwischen 5 und 8 Å liegen, und Käfige oder Käfigvolumen eines Käfigvolumens von 13 Å umfasst.

**6.** Verfahren nach den Ansprüchen 1 bis 5, bei dem die Zusammensetzung einen Zeolithen enthält, der Poren, deren Durchmesser zwischen 5 und 7,5 Å liegen, und Käfige oder Käfigvolumen eines Käfigvolumens von 13 Å umfasst.

**7.** Verfahren nach den Ansprüchen 1 bis 6, bei dem die Zusammensetzung einen kommerzielles HY Zeolithen (HFAU40) mit Si/Al = 32 und VM = 0,245 cm$^3$/g enthält.

**8.** Verfahren nach den Ansprüchen 1 bis 7, bei dem die Zusammensetzung einen Zeolithen des Faujasit-Typs enthält.

**9.** Verfahren nach den Ansprüchen 1 bis 8, bei dem die Zusammensetzung einen Zeolithen enthält, der eine Korngröße zwischen 0,01 und 0,8 mm aufweist.

**10.** Verfahren nach den Ansprüchen 1 bis 9, bei dem die Zusammensetzung einen Zeolithen enthält, der eine Korngröße zwischen 0,1 und 0,5 mm aufweist.

**11.** Verfahren nach den Ansprüchen 1 bis 10, bei dem die Zusammensetzung 80 bis 99,9% Zeolith enthält.

**Claims**

**1.** Method for the phytosanitary treatment of plants by means of a phytosanitary composition comprising

a) a hydrophobic zeolite the Si/Al ratio of which is between 5 and 2000;
b) a pesticidally active substance chosen from pirimicarb, penconazole, epoxiconazole, chlortoluron and 5-chlorosalicylic acid, adsorbed and included within the zeolite,

said composition being employed by root application during the treatment of the plants.

**2.** Method according to claim 1, wherein the composition comprises a zeolite the Si/Al ratio of which is between 5 and 100.

**3.** Method according to claims 1 to 2, wherein the composition comprises a zeolite with a 12-atom pore opening or a zeolite with a 10- or 8-atom pore opening.

**4.** Method according to claims 1 to 3, wherein the composition comprises a zeolite chosen from AFI (AIPO$_4$-5), AFR (SAPO-40), AFS (MAPSO-46), AFY (CoAPO-50), ATO (AIPO$_4$.31), ATS (MAPO-36), BEA (Beta), BOG (Boggsite), BPH (Beryllophosphate-H), CAN (Cancrinite), CON (CIT-1), DFO (DAF-1), EMT (EMC-2), FAU (Faujasite), GME (Gmelinite°LTL (Linde type L), MAZ (Mazzite), MEI (ZSM-18), MOR (Mordenite), MTW (ZSM-12), OFF (Offretite), RON (Roggianite), VET (VPI-8), AEL (AIPO$_4$-11), AFO (AIPO$_4$-41), AHT (AIPO$_4$-H2), DAC (Dachiardite), EPI (Epistilbite), EUO (EU-1), FER (Ferrierite), HEU (Heulandite), LAU (Laumontite), MEL (ZSM-11), MFI (ZSM-5), MFS (ZSM-57), MTT (ZSM-23), NES (NU-87), -PAR (Partheite), STI (Stilbite), TON (Theta-1), WEI (Weinebeneite), -WEN (Wenkite), ABW (Li-A (Barrer and White)), AEI (AIPO$_4$-18), AFT (AIPO$_4$-52), AFX (SAPO-56), APC (AIPO$_4$-C), APD (AIPO$_4$-D), ATN (MAPO-39), ATT (AIPO$_4$-12-TAMU), ATV (AIPO$_4$-25), AWW (AIPO$_4$-22), BIK (Bikitaite), BRE (Brewsterite), CAS (Cesium Aluminosilicate (Araki)), CHA (Chabazite), DDR (Deca-dodecasil 3R), EAB (TMA-E), EDI (Edingtonite), ERI (Erionite), GIS (Gismondine), GOO (Goosecreekite), JBW (NaJ (Barrer and White)), KFI (ZK-5), LEV (Levyne), LTA (Linde type A), MER (Merlinoite), MON (Montesommaite), NAT (Natrolite), PAU (Paulingite), PI-H (Phillilpsite), RHO (Rho), RTE (RUB-3), RTH (RUB-13), THO (Thomsonite), VNI (VP1-9), YUG (Yugawaralite), ZON (ZAPO-M1).

5. Method according to claims 1 to 4, wherein the composition comprises a zeolite containing pores the diameter of which is from 4 to 8 Å, and cages or cage volumes with a cage volume of 13 Å.

6. Method according to claims 1 to 5, wherein the composition comprises a zeolite containing pores the diameter of which is from 5 to 7.5 Å, and cages or cage volumes with a cage volume of 13 Å.

7. Method according to claims 1 to 6, wherein the composition comprises a commercial HY zeolite (HFAU40) with Si/Al = 32 and MV (micropore volume) = 0.245 cm$^3$/g.

8. Method according to claims 1 to 7, wherein the composition comprises a zeolite of the faujasite type.

9. Method according to claims 1 to 8, wherein the composition comprises a zeolite having a particle size of between 0.01 and 0.8 mm.

10. Method according to claims 1 to 9, wherein the composition comprises a zeolite having a particle size of between 0.1 and 0.5 mm.

11. Method according to claims 1 to 10, wherein the composition comprises from 80 to 99.9% zeolite.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4911899 A
- GB 1304543 A
- FR 2344226
- FR 2530417
- DE 4131117
- WO 2008149232 A
- EP 1652536 A
- US 3359092 A
- FR 1255314
- GB 1566274 A

- WO 0143548 A
- DE 2221031
- GB 1543160 A
- EP 1064843 A
- JP 60146803 B
- JP 61087602 B
- JP 3262529 B
- WO 03000300 A
- WO 2009148816 A
- DE 19824680

**Littérature non-brevet citée dans la description**

- **SOPKOVA A. et al.** *Zeolites and veterinary pharmacy,* 1994, vol. 4, 366-372
- **SOPKOVA et al.** Sorption and desorption of inclusion compounds guests. *Journal of Thermal Analysis and Calorimetry,* 1999, vol. 56, 1359-1366
- **SOPKOVA, A. ; MEZES, P.** About the inclusion of an insecticide in zeolitic materials. *Journal of Thermal Analysis,* 1996, vol. 46, 471-478
- Zeolithes. Elsevier Science, 1996, vol. 17, 1-230

- **SOPKOVA, A.** Inclusion-compounds - possibility of their combination and use in différent branches of chemistry. *Journal of Inclusion Phenomena and Molecular Recognition in Chemistry,* 1992, vol. 14, 5-17
- **SOPKOVA, A. ; JANOKOVA, E.** An insecticide stabilized by natural zeolite. *Journal of Thermal Analysis and Calorimetry,* 1998, vol. 53, 477-485
- **SPRYNSKYY, M. ; LIGOR, T. ; LEBEDYNETS, M. ; BUSZEWSKI, B.** Kinetic and equilibrium studies of phenol adsorption by natural and modified forms of the clinoptilolite. *Journal of Hazardous Materials,* 2009, vol. 169, 847-854